# EUROPÄISCHE PATENTANMELDUNG

(11) **EP 4 660 013 A1**
(43) Veröffentlichungstag der Anmeldung: **10.12.2025**
(21) Anmeldenummer: 24179935.2
(22) Anmeldetag: 04.06.2024
(51) Int. Cl.: B60Q 3/54, B60K 37/00, B60Q 1/32, B60R 13/00, B60R 13/02, F21W 104/00, B60Q 1/00, B60Q 3/64, F21S 43/19, F21S 43/239, F21S 43/20, F21W 106/00, F21V 8/00, G09F 13/04, H01H 13/83, H01H 9/00

(54) **HINTERLEUCHTBARES BAUTEIL**

(71) Anmelder: WEIDPLAS GmbH, 8630 Rüti (CH)
(72) Erfinder: MOITZI, Stefan, 8724 Spielberg (AT); QUIRING, Johannes, 59505 Bad Sassendorf (DE); KURZ, Alexander, 66663 Merzig (DE); CASSAN, Jérôme, 8330 Pfäffikon ZH (CH); FRIJTERS, Jan-Eric, 8843 Oberiberg (CH); KINDL, Christoph, 66386 St. Ingbert (DE); RUDOLF, René, 08412 Werdau (DE)
(74) Vertreter: Rutz, Andrea

(57) **Zusammenfassung**

Es wird ein hinterleuchtbares Bauteil (1), insbesondere für ein Fahrzeug, mit einer Sichtseite (10) und einer Rückseite (11) angegeben, welches eine erste Bauteileinheit (2) und eine zweite Bauteileinheit (3) aufweist. Die erste Bauteileinheit (2) umfasst eine lichtdurchlässige Trägerschicht (20), insbesondere Trägerfolie, und rückseitig an der Trägerschicht (20) angebrachte elektronische Elemente (22). Die zweite Bauteileinheit (3) hat einen rückseitig zur ersten Bauteileinheit (2) angeordneten Lichtleiter (30). Die elektronischen Elemente (22) umfassen zumindest ein Leuchtelement (220, 223, 224), welches zumindest teilweise in den Lichtleiter (30) hineinragt und derart zur Einstrahlung von Licht in den Lichtleiter (30) ausgebildet ist, dass das eingestrahlte Licht mittels Umlenkung durch die Trägerschicht (20) hindurch zur Sichtseite (10) hin abgestrahlt wird. Die erste Bauteileinheit (2) ist lösbar an der zweiten Bauteileinheit (3) angebracht. Ausserdem wird ein Verfahren zur Herstellung eines solchen Bauteils (1) angegeben.

## Beschreibung

### TECHNISCHES GEBIET

Die vorliegende Erfindung betrifft ein hinterleuchtbares Bauteil, das insbesondere zur Verwendung in oder an einem Fahrzeug geeignet ist. Die Erfindung betrifft ausserdem ein Verfahren zur Herstellung eines solchen Bauteils.

### STAND DER TECHNIK

Bei Kraftfahrzeugen, aber auch bei anderen Fahrzeugen, ist es bekannt, im Innen- oder Aussenraum Anzeige- und Ausleuchtelemente vorzusehen, um zum Beispiel den Fahrgastraum auszuleuchten oder um die Wahrnehmung der Insassen, aber auch von anderen Personen, zu lenken. So werden oft hinterleuchtbare Dekorelemente und Zierleisten verwendet, um zum Beispiel in Form einer Türeinstiegsleiste auf den Markennamen des Kraftfahrzeugs hinzuweisen, oder um einen speziellen Effekt zu bewirken und dabei die Wahrnehmung des Betrachters auf sich zu ziehen. Auch Bedien- und Betätigungselemente werden oft mit Anzeige- und Ausleuchtelementen versehen, die von einer rückseitig angeordneten Lichtquelle beleuchtet werden, um die Erkennbarkeit der einzelnen Bedien- und Betätigungselemente insbesondere auch bei Nacht zu gewährleisten.

Beispielsweise offenbart die auf dieselbe Schutzrechtsinhaberin lautende EP 2 322 962 A1 ein Bauteil mit einem im Spritzgussverfahren hergestellten Lichtleiter. Ein Leuchtmittel ist im Inneren des Lichtleiters angeordnet und von diesem umspritzt.

Die DE 100 16 714 A1 offenbart eine Vorrichtung, bei der Leuchtdioden in durchgehenden Löchern eines Lichtleiters angeordnet sind.

Die DE 10 2018 003 584 A1 offenbart eine Wandleuchte zur Beleuchtung eines Kühlschranks. Die Wandleuchte weist einen Modulkörper mit einem Fensterbereich auf, an dessen Rückseite eine Leiterplatte mit daran angebrachten Lichtquellen lösbar oder unlösbar befestigt ist. Das von den Lichtquellen ausgestrahlte Licht gelangt via eine Reflexionsfläche durch den Fensterbereich hindurch in den Innenraum des Kühlschranks.

In der US 9,958,138 B2 wird eine Innenleuchte eines Fahrzeugs angegeben, bei der eine in einem Gehäuseinnenraum angeordnete Leuchtquelle Licht zu einer lumineszierenden Schicht hin ausgestrahlt wird. Das von der lumineszenten Schicht entsprechend erzeugte Licht wird durch das zur Sichtseite hin transparente Gehäuse hindurch nach aussen abgestrahlt.

Die KR 2014-0127925 A offenbart eine Chipkarte mit darin angeordneten Leuchtdioden zur Ausleuchtung eines von aussen her einsehbaren dreidimensionalen Effektbereichs.

KR 101745373 B1 offenbart eine flexibel ausgebildete Leiterplatte, die mit Leuchtdioden bestückt ist. Das von den Leuchtdioden ausgestrahlte Licht wird von einer beabstandet dazu angeordneten Reflektorschicht umgelenkt und durch die als Diffusor wirkende Leiterplatte hindurch zur Sichtseite abgestrahlt.

In der US 2011/0176303 A1 ist eine doppelseitige Lampe offenbart, bei welcher beabstandet zu einer mit Leuchtdioden ausgestattete Leiterplatte ein optischer Film sowie eine Diffusionsschicht angeordnet sind. Vom optischen Film wird ein Teil des Lichts reflektiert und durch Löcher der Leiterplatte hindurch zu einer Seite hin abgestrahlt. Der nicht reflektierte Teil des Lichts gelangt durch die Diffusionsschicht hindurch auf der gegenüberliegenden Seite nach aussen.

Die US 11,293,603 B2 offenbart ein hinterleuchtbares Bauteil, bei dem Leuchtquellen an der Rückseite einer Deckschicht angebracht sind, um Licht zur Rückseite hin auszustrahlen. Das ausgestrahlte Licht wird von einer Reflexionsschicht nach vorne hin umgelenkt und gelangt durch einen lichtdurchlässigen Bereich der Deckschicht hindurch zum Betrachter.

Des Weiteren offenbart die WO 2015/166135 A1 eine Vorrichtung, bei der auf einem Substrat angebrachte Leuchtdioden in entsprechend vorgesehene Öffnungen oder Vertiefungen eines Lichtleiters hineinragen, um Licht durch den Lichtleiter sowie das lichtdurchlässig ausgebildete Substrat hindurch nach aussen hin abzustrahlen. Das Substrat ist stoffschlüssig mittels eines Klebstoffs am Lichtleiter befestigt.

Ferner offenbart die WO 2004/045853 A2 ein Verfahren zur Herstellung eines Bauteils mit einem Körper, auf dem ein Haftklebstoff aufgetragen ist.

Die hinterleuchtbaren Bauteile des Standes der Technik haben den Nachteil, dass sie entweder einen komplizierten Aufbau haben und deshalb aufwändig in der Herstellung sind, oder dass sie nur schwierig recyclierbar sind und zum Beispiel bei einem Ausfall der Elektronik oder von Teilen davon als Ganzes entsorgt bzw. ausgetauscht werden müssen.

### DARSTELLUNG DER ERFINDUNG

Es ist also eine Aufgabe der vorliegenden Erfindung, ein hinterleuchtbares Bauteil anzugeben, welches nicht nur einfach herstellbar, sondern auch gut recyclierbar und reparierbar ist.

Zur Lösung dieser Aufgabe wird ein hinterleuchtbares Bauteil vorgeschlagen, wie es in Anspruch 1 angegeben ist. Ausserdem wird in Anspruch 18 ein Verfahren zur Herstellung eines solchen Bauteils angegeben. Bevorzugte Ausführungsformen sind in den abhängigen Ansprüchen angegeben.

Die vorliegende Erfindung stellt also ein hinterleuchtbares Bauteil, insbesondere für ein Fahrzeug, mit einer Sichtseite und einer Rückseite, zur Verfügung, aufweisend
eine erste Bauteileinheit mit einer lichtdurchlässigen Trägerschicht, insbesondere Trägerfolie, und mit rückseitig an der Trägerschicht angebrachten elektronischen Elementen; sowie
eine zweite Bauteileinheit mit einem rückseitig zur ersten Bauteileinheit angeordneten Lichtleiter,
wobei die elektronischen Elemente zumindest ein Leuchtelement umfassen, welches zumindest teilweise in den Lichtleiter hineinragt und derart zur Einstrahlung von Licht in den Lichtleiter ausgebildet ist, dass das eingestrahlte Licht mittels Umlenkung durch die Trägerschicht hindurch zur Sichtseite hin abgestrahlt wird.

Die erste Bauteileinheit ist lösbar an der zweiten Bauteileinheit angebracht.

Indem die erste Bauteileinheit lösbar an der zweiten Bauteileinheit angebracht ist, kann die Trägerschicht inklusive den elektronischen Elementen zum Beispiel bei einem Defekt einfach dem Bauteil entnommen und ausgetauscht oder repariert werden. Auch kann das Bauteil dadurch nach Ablauf seiner Lebensdauer erheblich einfacher in seine Grundbestandteile zerlegt und recycliert werden. Das Bauteil ist somit nachhaltiger herstellbar. Insbesondere kann das angegebene Bauteil auch besonders leicht im Gewicht hergestellt werden.

"Lösbar angebracht" ist eine Bauteileinheit an einer anderen Bauteileinheit dann, wenn die beiden Bauteileinheiten im bestimmungsgemässen Gebrauch des Bauteils zwar aneinandergehalten sind, insbesondere unbeweglich relativ zueinander zusammengehalten sind, jedoch nach Gebrauch zerstörungsfrei wieder voneinander entfernt werden können. Unter "zerstörungsfrei" wird verstanden, dass die beiden Bauteileinheiten ihre jeweiligen Funktionen nach der Entfernung voneinander weiterhin erfüllen können und zum Beispiel in demselben oder einem anderen identisch hergestellten Bauteil weiterbenutzt werden können. Bevorzugt sind die beiden Bauteileinheiten nach der Trennung voneinander somit wieder aneinander anbringbar, bevorzugt derart wieder aneinander anbringbar, dass das Bauteil ohne irgendwelche Einschränkungen weiterverwendbar ist. Das Entfernen der beiden Bauteileinheiten voneinander kann je nachdem mittels eines Spezialwerkzeugs, mit Hilfe von chemischen Mitteln (z.B. zum Lösen eines Klebstoffs) und/oder von Hand erfolgen. Bevorzugt ist jedoch ein Entfernen der beiden Bauteileinheiten voneinander ausschliesslich mittels Werkzeugen und/oder von Hand möglich.

Das Bauteil ist hinterleuchtbar, das heisst, dass zumindest ein lichtdurchlässig ausgebildetes Element des Bauteils, in der Regel die Trägerschicht sowie allfällige weitere Bauteilelemente, von der Rückseite her mit Licht beleuchtet und dadurch aus Sicht des Betrachters erhellt wird.

Als "lichtdurchlässig" wird ein Element dann verstanden, wenn es entweder transparent oder transluzent ist. Der Begriff "transparent" bezeichnet im Rahmen dieses Dokuments Materialien, wie beispielsweise Fensterglas, bei denen Dahinterliegendes relativ klar erkennbar ist, also Materialien, welche für Strahlung des für das menschliche Auge sichtbaren Spektrums weitgehend durchlässig sind. Mit anderen Worten können Lichtstrahlen weitgehend ungehindert durch ein transparentes Element hindurchtreten, das heisst von dessen Rückseite zu dessen Vorderseite gelangen. Transparente Materialien werden umgangssprachlich auch oft als durchsichtig bezeichnet. Demgegenüber bezeichnet der Begriff "transluzent" Materialien, die Licht nur teilweise durchlassen, bei denen die Anwesenheit von Dahinterliegendem für das menschliche Auge also zwar im Groben, das heisst insbesondere aufgrund von veränderten Helligkeitsverhältnissen, nicht jedoch in Details erkennbar ist. Transluzente Materialien sind somit lichtdurchlässig, aber undurchsichtig. Ein Beispiel für ein transluzentes Material ist Milchglas. Ein transparentes Bauteil ist somit zu unterscheiden von einem lediglich transluzenten Bauteil, wie zum Beispiel Milchglas, von welchem Licht nur diffus hindurchgeleitet wird, so dass die Umrisse eines Gegenstandes unscharf werden und im Extremfall nur noch Helligkeitsunterschiede erkennbar sind. Bei einem transparenten Element oder Bauteil sind die Umrisse von dahinterliegenden Gegenständen hingegen aufgrund einer einigermassen scharfen Abbildung zur Vorderseite hin noch gut erkennbar. Lichtdurchlässige Elemente, wie sie hier zum Einsatz kommen können, weisen bevorzugt einen totalen Lichttransmissionsgrad von wenigstens 70%, bevorzugter von wenigstens 80%, noch bevorzugter von wenigstens 85%, bevorzugt gemessen gemäss der Norm DIN EN ISO 13468-1, Januar 1997, auf.

Nach einer Weiterbildung der Erfindung ist das Bauteil geeignet für ein Fahrzeug, insbesondere für ein Kraftfahrzeug. Bevorzugt weist ein Fahrzeug, insbesondere ein Kraftfahrzeug, das Bauteil auf. Das hinterleuchtbare Bauteil kann ein Interieurbauteil zur Anordnung im Fahrgastraum eines Fahrzeugs sein oder ein Exterieurbauteil zur Anordnung an der Aussenseite eines Fahrzeugs. Im Falle eines Kraftfahrzeugs kann es sich insbesondere um ein Auto handeln. Das Bauteil, welches insbesondere ein Zierelement sein kann, kann aber auch für den Einsatz in einem schienengebundenen Fahrzeug oder in einem Flugzeug vorgesehen sein. Falls es sich beim Bauteil um ein Zierelement handelt, kann es eine Zierleiste, eine Türleiste oder ein Bedienelement, wie zum Beispiel eine Taste oder ein Schalter, bilden. Insbesondere kann es eine Fuss- oder Einstiegsleiste bilden, welche im Bereich der Türe eines Fahrzeugs, insbesondere eines Autos, angeordnet wird und dort zur Kennzeichnung der Höhe der Einstiegsschwelle oder zur Angabe eines Markennamens dient. Insbesondere kann das Bauteil ein Frontpanel eines Elektrofahrzeugs bilden. Bei Elektrofahrzeugen entsteht durch den Wegfall des für die Kühlung eines Verbrennermotors benötigten Lufteinlassgrills ein grosser Freiraum in der Fahrzeugfront, in welchem das erfindungsgemässe Bauteil für dekorative Zwecke, insbesondere auch für Markenauftritte und/oder Firmen/Fahrzeugmodell-Kennzeichnung angeordnet werden kann. Das erfindungsgemässe Bauteil kann zudem auch als Frontpanel und/oder Frontgrill bei Verbrennerfahrzeugen und Fahrzeugen mit alternativen Antriebstechnologien (z.B. Wasserstoff, Hybrid, Plug-In Hybrid) ausgebildet sein.

Die Trägerschicht dient insbesondere bei der Herstellung des Bauteils dazu, die elektronischen Elemente zu tragen, d.h. insbesondere zu halten. Je nach Ausführungsform können die elektronischen Elemente beim fertig hergestellten Bauteil auch durch weitere Bauteilelemente gehalten werden. Die Trägerschicht dient bevorzugt aber auch dazu, die elektronischen Elemente zu halten, wenn die erste Bauteileinheit zum Beispiel bei einem Austausch wieder von der zweiten Bauteileinheit entfernt wird.

Die Trägerschicht kann zusätzlich zum Tragen des einen oder der mehreren Leuchtelemente noch zum Tragen von weiteren elektronischen Elementen und/oder weiteren nicht-elektronischen Elementen dienen. Die elektronischen Elemente und/oder die nicht-elektronischen Elemente können auf einer Oberfläche der Trägerschicht angebracht sein. Bei der Oberfläche, auf welcher die elektronischen und/oder nicht-elektronischen Elemente angebracht sind, kann es sich insbesondere um die Rückseite der Trägerschicht handeln, also die im bestimmungsgemässen Gebrauchszustand der Sichtseite des Bauteils abgewandte Seite der Trägerschicht. Zumindest das oder die erwähnten Leuchtelemente sind auf der Rückseite der Trägerschicht angebracht. Das oder die Leuchtelemente sowie die allfälligen weiteren elektronischen und/oder nicht-elektronischen Elemente können dabei zumindest teilweise in das Material der Trägerschicht eingebettet sein. Gewisse elektronische und/oder nicht-elektronische Elemente, wie insbesondere elektrische Leiterbahnen, können auch teilweise oder vollständig im Inneren der Trägerschicht angeordnet sein. Auch ist die Anordnung von weiteren Leuchtelementen, anderen elektronischen Elementen und/oder nicht-elektronischen Elementen auf der Vorderseite der Trägerschicht denkbar, also auf der der Sichtseite des Bauteils zugewandten Seite der Trägerschicht.

Bei der Trägerschicht handelt es sich bevorzugt um eine Trägerfolie. Unter einer Folie wird ein im Verhältnis zu seiner Längen- und Breitenerstreckung dünnes Flächengebilde verstanden, das aus einer so dünnen Schicht von zum Beispiel einem Metall- und/oder Kunststoffmaterial hergestellt ist, dass es ohne Weiteres und zerstörungsfrei von Hand gebogen werden kann, also eine gute Flexibilität aufweist. Die Trägerschicht weist dadurch bei der Herstellung eine gute Umformbarkeit auf und kann gut an beliebige dreidimensionale Strukturen von zum Beispiel dem Lichtleiter angepasst werden. Je nach Ausführungsform kann die Trägerschicht aber auch starr ausgebildet sein, was beispielsweise der Fall sein kann, wenn die Trägerschicht im Spritzgussverfahren hergestellt ist. Eine starr ausgebildete Trägerschicht weist in der Regel eine gewisse Eigenstabilität auf, was bei der Herstellung und im fertigen Bauteil einen Vorteil darstellen kann.

Gemäss einer insbesondere bevorzugten Ausführungsform ist die Trägerschicht aus einem Kunststoff hergestellt. Beim Kunststoff kann es sich insbesondere um Silikon, insbesondere Silikonkautschuk, handeln. Silikon, insbesondere Silikonkautschuk, zeichnet sich in Bezug auf die vorliegende Erfindung insbesondere durch seine gute Umformbarkeit und Lichtdurchlässigkeit aus. Des Weiteren kann eine aus Silikon, insbesondere Silikonkautschuk, hergestellte Trägerschicht auch als Diffusor eingesetzt werden, was bei vielen Ausführungsformen bevorzugt ist. Eine Ausbildung der Trägerschicht als Diffusor kann aber auch vorgesehen sein, wenn die Trägerschicht aus anderen Materialien als Silikon, insbesondere Silikonkautschuk, hergestellt ist. Beispielsweise kann die Trägerschicht, unabhängig davon, ob sie als Diffusor ausgebildet ist oder nicht, zum Beispiel auch aus Polycarbonat (PC), Polymethylmethacrylat (PMMA), PET (Polyethylenterephthalat), CA (Celluloseacetat), TPE (Thermoplastisches Elastomer), PI (Polyimid) oder aus Glas hergestellt sein. Wenn die Trägerschicht aus einem Kunststoff hergestellt ist, weist dieser bevorzugt wenigstens einen Thermoplasten und/oder wenigstens einen Duroplasten und/oder wenigstens ein Silikon, insbesondere Silikonkautschuk, und / oder wenigstens ein thermoplastisches Elastomer oder eine Mischung der genannten Substanzen auf. Grundsätzlich bevorzugt ist die Trägerschicht aus einem thermoplastischen Polymer hergestellt. Es ist auch möglich, zusätzlich zur Trägerschicht eine separate Diffusorschicht, beispielsweise in Form einer Diffusorfolie vorzusehen. Auch eine separate vorgesehene Diffusorschicht kann insbesondere aus Silikon, insbesondere Silikonkautschuk, oder aus einem thermoplastischen Elastomer hergestellt sein. Ein Diffusor ermöglicht eine gleichmässige und aus Sicht des Betrachters richtungsunabhängige Ausleuchtung der entsprechenden Bereiche des Bauteils. Die Trägerschicht ist bevorzugt, aber nicht zwingend, als Ganzes einstückig hergestellt.

Ein bevorzugter Diffusor, welcher vorteilhaft aus einem lichtdurchlässigen Kunststoff hergestellt ist, enthält beispielsweise lichtstreuende Partikel, Pigmente oder Fasern, insbesondere Verstärkungsfasern. Der Diffusor bewirkt eine vergleichmässigte Abstrahlung von dem in den Diffusor eingeleiteten Licht. Bevorzugt ist der Diffusor als Folie ausgebildet.

Bevorzugt sind zusätzlich zu dem oder den Leuchtelementen noch weitere elektronische Elemente, insbesondere elektrische Leiterbahnen, rückseitig und/oder sichtseitig an der Trägerschicht angebracht. Die Leiterbahnen dienen bevorzugt dazu, das oder die Leuchtelemente mit elektrischer Energie zu versorgen. Die Leiterbahnen können insbesondere auf die Rückseite der Trägerschicht aufgedruckt oder in dieser eingebettet sein. Die Leiterbahnen können lichtdurchlässig ausgebildet sein, um für den Betrachter nicht als solche erkennbar zu sein. Sie können aber auch opak ausgebildet sein und dazu ausgenutzt werden, um beim Hinterleuchten ein dahinter angeordnetes Element, wie zum Beispiel das Leuchtelement, abzudecken, oder um zum Beispiel ein Symbol oder einen Schriftzug darzustellen. Unter einem "Symbol" werden im Rahmen dieses Dokuments zum Beispiel Buchstaben, Zahlen, Logos, Markenangaben, Piktogramme oder ähnliches verstanden. Weitere elektronische Elemente, die an der Rück- und/oder Sichtseite der Trägerschicht angebracht sein können, sind Sensoren, wie beispielsweise Drucksensoren, kapazitive Sensoren oder pyroelektrische Sensoren.

Bevorzugt wird die Trägerschicht bei der Herstellung umgeformt, insbesondere druck- und/oder heissumgeformt, um sie beispielsweise an eine dreidimensionale Struktur des Lichtleiters oder eines Trägers anzupassen. Die Umformung kann grundsätzlich erst nach dem Anbringen der elektronischen Elemente gemacht werden, erfolgt bevorzugt aber zuvor. Das heisst, bevorzugt wird die Trägerschicht zuerst umgeformt und erst dann mit den elektronischen Elementen bestückt. Bei der Umformung wird die Trägerschicht bevorzugt von einer zweidimensionalen Form in eine dreidimensionale Struktur überführt. In ihrer zweidimensionalen Ursprungsform kann die Trägerschicht als insgesamt flache, sich in einer Ebene erstreckende zweidimensionale Struktur vorliegen. Je nachdem kann es aber bevorzugt sein, die Trägerschicht bei der Herstellung in einem aufgerollten Zustand bereitzustellen, um sie dann abzurollen und in eine gewünschte dreidimensionale Struktur umzuformen. Falls die Trägerschicht bei der Druckumformung bereits mit elektronischen Elementen bestückt ist, kann es vorteilhaft sein, die elektronischen Elemente und insbesondere das oder die Leuchtelemente mit einem Schutzelement zu bedecken, um sie vor Beschädigung zu schützen. Die Druck- und/oder Heissumformung der Trägerschicht kann insbesondere beim Spritzgussverfahren erfolgen, d.h. zum Beispiel durch den Anspritzdruck beim Hinterspritzen der Trägerschicht verursacht sein.

Die Vornahme einer Druck- und/oder Heissumformung zur Bildung einer dreidimensionalen Struktur bei der Bauteilherstellung ist auch in Bezug auf die Diffusorschicht sowie das weiter unten erwähnte Dekorelement sowie die ebenfalls weiter unten erwähnte reflektierende Schicht denkbar, sofern diese Elemente denn vorhanden sind.

Die Trägerschicht liegt bevorzugt direkt auf dem Lichtleiter auf. Je nach Ausführungsform ist es aber grundsätzlich auch denkbar, dass sie in einem Abstand zum Lichtleiter angeordnet ist.

Die Dicke der Trägerschicht ist vorteilhaft 1.8 mm oder geringer, noch vorteilhafter 1.5 mm oder geringer, noch vorteilhafter 1.2 mm oder geringer, noch vorteilhafter 1 mm oder geringer, noch vorteilhafter 0.8 mm oder geringer, noch vorteilhafter 0.75 mm oder geringer, noch vorteilhafter 0.6 mm oder geringer, insbesondere 0.5 mm, noch vorteilhafter 0.4 mm oder geringer, insbesondere 0.375 mm, am vorteilhaftesten 0.3 mm oder geringer, insbesondere 0.2 mm. Bei diesen Dicken kann die Trägerschicht besonders gut in eine dreidimensional geformte Struktur gebracht werden. Bevorzugt weist der Lichtleiter, sowie, falls vorhanden, die Diffusorschicht und/oder die weiter unten genannte reflektierende Schicht eine Dicke von 1.8 mm oder geringer, noch vorteilhafter 1.5 mm oder geringer, noch vorteilhafter 1.2 mm oder geringer, noch vorteilhafter 1 mm oder geringer, noch vorteilhafter 0.8 mm oder geringer, noch vorteilhafter 0.75 mm oder geringer, noch vorteilhafter 0.6 mm oder geringer, insbesondere 0.5 mm, noch vorteilhafter 0.4 mm oder geringer, insbesondere 0.375 mm, am vorteilhaftesten 0.3 mm oder geringer, insbesondere 0.2 mm, auf. Bei diesen Dicken können der Lichtleiter, die Diffusorschicht sowie die reflektierende Schicht ebenfalls besonders gut in eine dreidimensional geformte Struktur gebracht werden.

Wenn die Trägerschicht als Folie, insbesondere als Mehrschichtfolie, ausgebildet ist, zeichnet sie sich im Vergleich zu einem Spritzgussbauteil im Allgemeinen durch eine bessere Biegsamkeit und Flexibilität aus. Der Lichtleiter sowie die weiter unten genannte Diffusorschicht sowie die weiter unten genannte reflektierende Schicht können auch als Folie, insbesondere Mehrschichtfolie, ausgebildet sein.

Die zweite Bauteileinheit weist zumindest den Lichtleiter auf. Zusätzlich zum Lichtleiter kann die zweite Bauteileinheit aber noch weitere Elemente aufweisen, wie insbesondere weitere Lichtleiter und/oder weitere optische Elemente. Der Lichtleiter dient in der Regel zur Weiterleitung des von dem oder den Leuchtelementen ausgestrahlten Lichts auf dem Weg in Richtung der Sichtseite des Bauteils, also im bestimmungsgemässen Gebrauchszustand in Richtung des Betrachters. Der Lichtleiter ist hierzu üblicherweise lichtdurchlässig, d.h. transparent oder transluzent, ausgebildet.

Der Lichtleiter ist üblicherweise aus einem festen, allenfalls einem flüssigen Material hergestellt. Bevorzugt ist der Lichtleiter aus einem Kunststoff hergestellt, wobei es sich beim Kunststoff insbesondere um Silikon, insbesondere Silkonkautschuk, oder um ein thermoplastisches Elastomer handeln kann. Ausführungsformen sind aber auch möglich, bei denen der Lichtleiter zum Beispiel aus Polycarbonat (PC), Polymethylmethacrylat (PMMA), Polyethylen (PE), Polyurethan (PU), Polyurea (PUA), Polymethacrylmethylimid (PMMI), Polypropylen (PP), Polystyrol (PS) oder Polyvinylchlorid (PVC) hergestellt ist. Alternativ kann der Lichtleiter aber auch aus Glas hergestellt sein. Der Lichtleiter kann insbesondere im Spritzgussverfahren hergestellt sein. Der Lichtleiter ist bevorzugt, aber nicht zwingend, als Ganzes einstückig hergestellt. Der Lichtleiter kann starr ausgebildet sein, was insbesondere in der Regel der Fall ist, wenn er im Spritzgussverfahren hergestellt ist. Eine starre Ausbildung kann den Vorteil mit sich bringen, dass der Lichtleiter eine Eigenstabilität hat und dadurch insbesondere selbst zum Tragen und Formgeben der Trägerschicht dienen oder zumindest beitragen kann. Es gibt jedoch auch bevorzugte Ausführungsformen, bei denen der Lichtleiter durch eine Folie, also ein flexibles Flächengebilde, ausgebildet ist. Der Lichtleiter bildet bevorzugt eine Schicht des Bauteils, das heisst er hat in diesem Fall in der Regel eine im Vergleich zur Dicke um ein Vielfaches grössere Längs- und Breitenerstreckung. Die Längs- und Breitenerstreckung des Lichtleiters kann in gewissen Ausführungsformen gleich gross sein, wie diejenige der Trägerschicht.

Beim Lichtleiter kann es sich um eine Folie handeln, welche insbesondere aus PMMA oder PC hergestellt sein kann. Die Dicke der Folie ist vorteilhaft 1.8 mm oder geringer, noch vorteilhafter 1.5 mm oder geringer, noch vorteilhafter 1.2 mm oder geringer, noch vorteilhafter 1 mm oder geringer, noch vorteilhafter 0.8 mm oder geringer, noch vorteilhafter 0.75 mm oder geringer, noch vorteilhafter 0.6 mm oder geringer, insbesondere 0.5 mm, noch vorteilhafter 0.4 mm oder geringer, insbesondere 0.375 mm, am vorteilhaftesten 0.3 mm oder geringer, insbesondere 0.2 mm. Folien zeichnen sich im Vergleich zu einem Spritzgussbauteil im Allgemeinen durch eine bessere Biegsamkeit und Flexibilität aus.

Die zweite Bauteileinheit mit dem Lichtleiter ist also rückseitig zur ersten Bauteileinheit mit der Trägerschicht und den elektronischen Elementen angeordnet. Dies bedeutet üblicherweise, dass direkt rückseitig zu den elektronischen Elementen und insbesondere zu dem oder den Leuchtelementen sowie direkt rückseitig zu zumindest einem Teil oder der gesamten Trägerschicht der Lichtleiter angeordnet ist. Bevorzugt kann insbesondere sein, dass sich der Lichtleiter zur Rückseite des Bauteils hin teilweise oder vollständig über die Trägerschicht und die darauf angebrachten elektronischen Elemente und insbesondere das oder die Leuchtelemente hinaus erstreckt.

Der Umstand, dass das zumindest eine Leuchtelement zumindest teilweise in den Lichtleiter hineinragt, bedeutet, dass der Lichtleiter nicht nur direkt rückseitig zum entsprechenden Leuchtelement angeordnet ist, sondern zumindest teilweise auch seitlich dazu. Bevorzugt umgibt der Lichtleiter das zumindest eine Leuchtelement seitlich zumindest teilweise, besonders bevorzugt vollständig. Dies kann insbesondere dadurch erreicht werden, dass im Lichtleiter Vertiefungen oder durchgehende Löcher zur Anordnung von dem oder den Leuchtelementen vorgesehen sind. Im Falle einer Vertiefung ist der Lichtleiter in der Regel jeweils direkt rückseitig zu einem entsprechenden Leuchtelement angeordnet und umgibt dieses zudem seitlich auch. Im Falle eines durchgehenden Loches umgibt der Lichtleiter das entsprechende Leuchtelement zwar seitlich, ist dann meist aber nicht direkt rückseitig zum Leuchtelement angeordnet, d.h. direkt rückseitig zum Leuchtelement befindet sich kein Bereich des Lichtleiters. Dies kann gewollt sein, um beispielsweise auch eine Lichtabstrahlung zur Rückseite hin zu ermöglichen. Solange der Lichtleiter an der Rückseite der Trägerschicht angeordnet ist, an welcher auch das zumindest eine Leuchtelement angebracht ist, kann die zweite Bauteileinheit üblicherweise als rückseitig zur ersten Bauteileinheit angesehen werden. Bevorzugterweise ist dabei ein überwiegender Teil des in das durchgehende Loch hineinragenden Leuchtelements auf derselben Ebene wie der Lichtleiter oder sogar in Richtung der Sichtseite darüber angeordnet. Der Lichtleiter kann mehrere Teile aufweisen, d.h. mehrteilig aufgebaut sein. Die einzelnen Teile des Lichtleiters können aneinandergrenzen oder vollständig voneinander beabstandet sein. So kann z.B. ein weiter unten beschriebener Träger eine Vertiefung oder mehrere, bevorzugt vollständig voneinander beabstandete, Vertiefungen aufweisen und/oder im Boden und/oder in einer Seitenwand des Trägers können eine oder mehrere durchgehende, bevorzugt vollständig voneinander beabstandete, Öffnungen enthalten sein. In wenigstens einer Vertiefung und/oder in wenigstens einer durchgehenden Öffnung kann jeweils wenigstens ein Teil des Lichtleiters angeordnet sein.

Durch das Hineinragen des zumindest einen Leuchtelements zumindest teilweise in den Lichtleiter kann eine besonders effiziente Einkopplung von Licht in den Lichtleiter erreicht werden. Bevorzugt kontaktiert der Lichtleiter dabei das zumindest eine Leuchtelement vorteilhaft seitlich umlaufend. Des Weiteren kann durch das Hineinragen die Bauteilhöhe verringert werden und das oder die Leuchtelemente sind besser geschützt.

Es können ein einzelnes oder auch mehrere Leuchtelemente, d.h. Leuchtquellen, vorhanden sein. Vorzugsweise handelt es sich bei den Leuchtelementen um Leuchtdioden (LED's). Möglich ist beispielsweise aber auch eine Leuchtfolie, insbesondere eine Elektrolumineszenzfolie, oder OLED's, oder eine oder mehrere Glühbirnen. Bei nur einem einzigen Leuchtelement ist das Bauteil einfacher herstellbar, insbesondere auch was die Energieversorgung mittels Leiterbahnen oder elektrischen Kabeln angeht. Mittels mehrerer Leuchtelemente kann hingegen eine regelmässigere Ausleuchtung erzielt werden, oder aber die mehreren Leuchtelemente können gezielt für eine unregelmässige Ausleuchtung und dementsprechende Erzielung von besonderen optischen Effekten eingesetzt werden. Das oder die Leuchtelemente sind bevorzugt derart angeordnet, dass das von ihnen ausgestrahlte Licht direkt in den Lichtleiter eingestrahlt werden kann, das heisst ohne durch ein anderes Element hindurchzutreten, davon reflektiert oder gestreut zu werden.

Die Umlenkung des von dem zumindest einen Leuchtelements in den Lichtleiter eingestrahlten Lichts kann durch den Lichtleiter selbst oder auch durch ein anderes Element, insbesondere ein anderes optisches Element, erfolgen. Falls die Umlenkung durch den Lichtleiter selbst erfolgt, kann dies insbesondere durch eine oder mehrere im Inneren des Lichtleiters vorgesehene Lichtumlenkstrukturen bewirkt werden oder durch eine oder mehrere äussere Grenzflächen des Lichtleiters. Falls die Umlenkung durch ein anderes Element erfolgt, kann dies insbesondere durch eine reflektierende Schicht bewirkt werden. Das andere Element, insbesondere die reflektierende Schicht, kann dabei direkt an der Aussenseite des Lichtleiters angebracht sein, oder es kann derart angeordnet sein, dass das Licht zuerst durch ein weiteres Element, wie zum Beispiel einen weiteren Lichtleiter oder einen mit Luft gefüllten Raum, hindurchtreten muss, um das andere Element zu erreichen und von diesem umgelenkt zu werden. Das Licht kann derart umgelenkt werden, dass es wieder in den Lichtleiter eintritt oder sich ausserhalb von diesem weiter ausbreitet.

Falls eine reflektierende Schicht vorhanden ist, kann diese in einer Vertiefung des Lichtleiters eingelegt sein, beispielsweise um besser geschützt zu sein und/oder um sicherzustellen, dass das reflektierte Licht wieder in den Lichtleiter eintritt.

Bei der Ausbreitung der von dem zumindest einen Leuchtelement ausgestrahlten Lichtstrahlen innerhalb des Lichtleiters können, insbesondere an den Aussenflächen des Lichtleiters, (Mehrfach-)Reflexionen auftreten. Derartige Reflexionen können zur Ausbreitung des Lichts innerhalb des Lichtleiters beitragen.

Üblicherweise erreicht das Licht die Trägerschicht nach der Umlenkung und tritt dann durch diese hindurch, um in Richtung zur Sichtseite, d.h. zum Betrachter hin, abgestrahlt zu werden. Die Trägerschicht kann die Ausbreitung des hindurchtretenden Lichts je nachdem weiter beeinflussen, beispielsweise indem sie eine oder mehrere Umlenkungen und/oder eine Diffusion bewirkt.

Vorteilhaft wird von dem oder den Leuchtelementen ein überwiegender Hauptteil des Lichts in Richtung der Rückseite des Bauteils abgestrahlt und bevorzugt in dieselbe Richtung in den Lichtleiter eingekoppelt. Ein überwiegender Hauptteil des so in den Lichtleiter eingekoppelten Lichts wird dann bevorzugt im Lichtleiter oder ausserhalb davon in Richtung der Sichtseite umgelenkt, um in diese Richtung durch die Trägerschicht hindurch nach aussen zu treten.

Das Bauteil kann ausserdem ein Gehäuse aufweisen, in welchem die erste Bauteileinheit sowie die zweite Bauteileinheit und noch weitere Bauteilelemente, wie zum Beispiel der weiter unten erwähnte Träger, angeordnet sind. Das Gehäuse kann insbesondere zum Halten und/oder Schützen der Bauteileinheiten sowie der weiteren Bauteilelemente dienen sowie zum Befestigen des Bauteils an einem vorgesehenen Ort, zum Beispiel an oder in einem Fahrzeug.

Gemäss einer insbesondere bevorzugten Ausführungsform ist die erste Bauteileinheit mechanisch, insbesondere mittels Klemmung, an der zweiten Bauteileinheit gehalten. Eine mechanische Befestigung hat beispielsweise gegenüber einer stoffschlüssigen Verbindung den Vorteil, dass die beiden Bauteileinheiten bei Bedarf üblicherweise einfach und ohne Beschädigung wieder voneinander getrennt werden können. Die Klemmung kann insbesondere derart sein, dass die erste Bauteileinheit und insbesondere die Trägerschicht zwischen dem Lichtleiter und einem weiteren Bauteilelement eingeklemmt ist, d.h. der Lichtleiter und das weitere Bauteilelement üben jeweils direkt oder indirekt, d.h. via andere Bauteilelemente, einen Druck auf die erste Bauteileinheit, insbesondere die Trägerschicht, aus.

Die erste Bauteileinheit kann insbesondere auf die zweite Bauteileinheit aufgerastet sein. Eine Befestigung mittels Rastelementen kann einfach derart vorgesehen werden, dass die beiden Bauteileinheiten wieder voneinander trennbar und anschliessend wieder aneinander anbringbar sind. Zudem stellt das Aufrasten der ersten Bauteileinheit auf die zweite Bauteileinheit in der Herstellung in der Regel einen besonders einfach und schnell durchzuführenden Schritt dar. Um ein Aufrasten zu ermöglichen, kann eines oder mehrere der elektronischen Elemente, insbesondere das eine oder die mehreren Leuchtelemente, einen Hinterschnitt bilden, um bei der Montage mit dem Lichtleiter zu verrasten. Alternativ oder zusätzlich können Rastelemente durch Vorsprünge und/oder Vertiefungen gebildet werden, die insbesondere am Lichtleiter und/oder an der Trägerschicht vorgesehen sein können.

An der zweiten Bauteileinheit und insbesondere am Lichtleiter können einer oder mehrere Vorsprünge, insbesondere in Form von Stiften, ausgebildet sind, die in die erste Bauteileinheit, insbesondere die Trägerschicht, hineinragen und dadurch zum Halten der ersten Bauteileinheit an der zweiten Bauteileinheit dienen. Bei einer solchen Ausführungsform kann die erste Bauteileinheit somit bevorzugt derart an der zweiten Bauteileinheit angebracht werde, dass die erste Bauteileinheit mit ihrer Trägerschicht auf die an der zweiten Bauteileinheit bevorzugt am Lichtleiter vorgesehenen Vorsprünge aufgesteckt wird. Der oder die Vorsprünge können insbesondere am Lichtleiter angeformt, das heisst in einem Stück mit diesem ausgebildet sein. Die Vorsprünge können auch an den Lichtleiter angespritzt sein, und aus demselben Material oder aus einem anderen Material als dem Material des Lichtleiters hergestellt sein. In diesem Fall ist die Anordnung, umfassend den Lichtleiter und den Vorsprung, zwei- oder mehrstückig ausgebildet. Zusätzlich dazu kann die erste Bauteileinheit zwischen der zweiten sowie einer weiteren Bauteileinheit angeordnet, insbesondere eingeklemmmt sein, um dadurch ein Lösen der Steckverbindung zu verhindern. Zur Aufnahme der Vorsprünge, insbesondere Stifte, sind an der ersten Bauteileinheit, insbesondere an der Trägerschicht, bevorzugt entsprechende Durchbrüche und/oder Aussparungen vorgesehen.

Das Bauteil kann ausserdem eine weitere Bauteileinheit aufweisen, welche bevorzugt ein für einen Betrachter sichtbares Dekorelement und/oder einen Träger zum Tragen der ersten Bauteileinheit und/oder der zweiten Bauteileinheit umfasst. Das Dekorelement kann, muss aber nicht, die Sichtseite des Bauteils oder einen Teil davon bilden. Je nachdem kann es auch mit einer Schutzschicht, wie insbesondere einer Lackschicht überzogen sein, die lichtdurchlässig ausgebildet ist und/oder Durchbrüche aufweisen kann, so dass das Dekorelement für den Betrachter im bestimmungsgemässen Gebrauchszustand des Bauteils trotzdem sichtbar ist. Der Träger dient zum Tragen der ersten und/oder der zweiten Bauteileinheit, was bedeutet, dass die erste und/oder die zweite Bauteileinheit im bestimmungsgemässen Gebrauchszustand am Träger gehalten ist. Das Dekorelement und/oder der Träger können jeweils zusätzlich zur Trägerschicht und bevorzugt zum Lichtleiter eine weitere Schicht bilden, so dass das Bauteil einen insgesamt schichtartigen Aufbau hat. Das Dekorelement und/oder der Träger sind bevorzugt jeweils als Ganzes einstückig und vorteilhaft aus einem Metall oder Kunststoffmaterial hergestellt. Insbesondere können das Dekorelement und/oder der Träger im Spritzgussverfahren hergestellt sein. Das Dekorelement weist bevorzugt eine Vorderseite auf, welche bevorzugt der Sichtseite des Bauteils zugewandt ist. Der Lichtleiter weist bevorzugt eine Vorderseite auf, welche der Sichtseite des Bauteils zugewandt ist. Die weiter unten genannte Diffusorschicht sowie die weiter unten genannte reflektierende Schicht weisen bevorzugt jeweils eine Vorderseite auf, welche der Sichtseite des Bauteils zugewandt ist.

An der weiteren Bauteileinheit, insbesondere am Dekorelement und/oder am Träger, können einer oder mehrere Vorsprünge ausgebildet sein, die in die erste Bauteileinheit, insbesondere die Trägerschicht, und/oder in die zweite Bauteileinheit, insbesondere den Lichtleiter, hineinragen und dadurch zum Halten der ersten Bauteileinheit an der zweiten Bauteileinheit dienen. Der oder die Vorsprünge, welche bevorzugt am Dekorelement bzw. am Träger angeformt sind, können insbesondere in Form von Stiften vorgesehen sein. An der Trägerschicht und/oder am Lichtleiter können entsprechend ausgebildete Durchbrüche und/oder Aussparungen vorgesehen sein, um ein Durchragen der Vorsprünge zu ermöglichen. Die erste, die zweite und die weitere Bauteileinheit können dadurch bei der Herstellung einfach und schnell mittels Zusammenstecken miteinander verbunden werden. Um ein Lösen der Steckverbindung zu verhindern, ist die erste oder die zweite Bauteileinheit, insbesondere die Trägerschicht und/oder der Lichtleiter, im bestimmungsgemässen Gebrauchszustand zwischen zwei Bauteilelementen angeordnet, von denen eines durch das Dekorelement und/oder den Träger gebildet sein kann und das andere durch die zweite und/oder die erste Bauteileinheit, insbesondere den Lichtleiter und/oder die Trägerschicht.

Gemäss einer für bestimmte Anwendungen bevorzugten Ausführungsform weist das Bauteil ein für einen Betrachter sichtbares Dekorelement sowie einen Träger zum Tragen der ersten Bauteileinheit und/oder der zweiten Bauteileinheit auf. Die erste Bauteileinheit, insbesondere die Trägerschicht, ist dann bevorzugt aufgrund ihrer Anordnung zwischen dem Dekorelement und dem Träger an der zweiten Bauteileinheit gehalten ist. Die erste Bauteileinheit, insbesondere die Trägerschicht, kann dabei, muss aber nicht, zwischen dem Dekorelement und dem Träger eingeklemmt sein.

Das Dekorelement ist bevorzugt lösbar am Träger und/oder am Lichtleiter befestigt. Die Befestigung kann dabei mechanisch oder mittels eines Klebstoffs erfolgen. Möglich ist aber auch, dass das Dekorelement unlösbar, das heisst zum Beispiel mittels Laserschweissen oder Heissprägung, am Träger und/oder am Lichtleiter befestigt ist.

Das Dekorelement ist bevorzugt im Spritzgussverfahren hergestellt. Neben dem klassischen Spritzgiessen kann hierzu auch ein Spritzprägeprozess angewendet werden. Hier ist das Werkzeug beim nahezu drucklosen Befüllen der Kavität mit dem Thermoplast nicht vollständig geschlossen. Nach dem Füllen wird das Werkzeug vollständig geschlossen. Dadurch verringert sich das Volumen bzw. erhöht sich der Druck in der Kavität, wodurch das Bauteil seine endgültige Form erhält.

Alternativ kann zur Herstellung des Dekorelements zum Beispiel eine Thermoplastplatte oder -folie in ein einseitiges oder doppelseitiges Werkzeug eingelegt werden. Eine Spritzguss- oder anderweitige Umformung kann mit zusätzlicher Beaufschlagung eines Gasüber- oder -unterdruckes unterstützt sein. Auch ist es möglich, Prepegfolien oder ein Gewebe flächig in einem Presswerkzeug zu schichten oder als Stapel in eine Pressmatrize einzulegen und zu pressen (Formpressen oder Fliesspressen). Als weitere Alternative ist es denkbar, gestapelte oder geschichtete Prepegfolien/Gewebe in eine Kavität einzulegen, mit z.B. Epoxyharz zu laminieren bzw. zu durchtränken und anschliessend mit einem Vakuum zu beaufschlagen und zu formen (sog. Vacuum Bagging). Des Weiteren können gestapelte oder geschichtete Prepegfolien/Gewebe in eine Kavität eingelegt werden, mit z.B. Epoxyharz laminiert bzw. durchtränkt und in einem Autoklav mit Wärme beaufschlagt werden.

Zur Herstellung des Dekorelements kann zum Beispiel auch eine Sensor- oder Heizfolie verwendet werden, die mit Leiterbahnen und/oder Sensorflächen, jedoch bevorzugt nicht mit weiteren elektronischen Bauelementen versehen ist. Alternativ kann auch eine Heizfolie bereitgestellt werden, welche mittels Drahteinlegetechnik hergestellt ist. Bei der weiteren Herstellung, wozu bevorzugt ein Spritzpräge- oder Spritzgiessprozess angewandt wird, verbindet sich diese Folie mit dem Polymer im Werkzeug. Nach Entnahme des Dekorelements aus dem Werkzeug ist eine Weiterveredelung (z.B. Physical Vapor Deposition(PVD)-Beschichten, Lackieren, Lasern etc.) und/oder eine Nachbearbeitung möglich (Entfernen der Angüsse, Befräsen der Konturen etc.).

Zur Verwendung als Dekorelement sind unter anderem auch faser- und/oder gewebeverstärkte Materialien mit opaker oder lichtdurchlässiger Matrix möglich.

Im bestimmungsgemäss verbauten Zustand des Bauteils ist die Sichtseite in der Regel wenigstens teilweise, bevorzugt vollständig, sichtbar und bevorzugt zumindest teilweise oder sogar vollständig hinterleuchtbar.

Der Träger kann opak ausgebildet sein und den Lichtleiter und/oder die Trägerschicht seitlich umgeben, um dadurch ein seitliches Austreten von Lecklicht zu verhindern. Umgekehrt kann der Träger aber auch insgesamt lichtdurchlässig oder stellenweise lichtdurchlässig ausgebildet sein oder nur an der Rückseite des Lichtleiters bzw. an bestimmten Stellen an der Seite des Bauteils lichtdurchlässig ausgebildet sein, um eine rückseitige und/oder seitliche Lichtabstrahlung vollständig oder stellenweise zuzulassen und damit besondere optische Effekte zu bewirken. Zu demselben Zweck kann der Träger auch eine oder mehrere Öffnungen aufweisen.

Der Lichtleiter kann in den Träger eingelegt, an diesen angespritzt oder im Zweikomponentenspritzguss mit diesem hergestellt sein. Falls der Lichtleiter an den Träger angespritzt oder im Zweikomponentenspritzguss mit diesem hergestellt ist, sind der Lichtleiter und der Träger gemäss einer bevorzugten Ausführungsform aus demselben Kunststoffmaterial hergestellt, wie zum Beispiel aus Polycarbonat (PC) oder Polymethylmethacrylat (PMMA). Durch die Verwendung desselben Grundmaterials vereinfacht sich das Recycling des Lichtleiters und des Trägers, da keine stoffliche Trennung von Lichtleiter und Träger mehr notwendig ist. Um bestimmte optische Effekte zu erzeugen, kann das Kunststoffmaterial des Lichtleiters und/oder des Trägers, bevorzugt dasjenige des Trägers, eingefärbt sein.

Der Lichtleiter ist bevorzugt lösbar am Träger befestigt. Die Befestigung kann dabei mechanisch oder mittels eines Klebstoffs erfolgen. Möglich ist aber auch, dass der Lichtleiter unlösbar am Träger befestigt ist, was zum Beispiel der Fall ist, wenn die Anordnung umfassend den Lichtleiter und den Träger im Mehrkomponentenspritzgussverfahren, insbesondere im Zweikomponentenspritzgussverfahren, hergestellt ist.

Alternativ oder zusätzlich zu den zuvor genannten Befestigungsarten kann die erste Bauteileinheit mittels eines ablösbaren Klebstoffs an der zweiten Bauteileinheit gehalten sein. Ein ablösbarer Klebstoff ist ein Klebstoff, der mittels chemischen Mitteln oder auch einfach mittels Abziehen wieder gelöst werden kann, um zwei damit aneinander befestigte Elemente wieder voneinander zu trennen. Der Klebstoff kann wiederverwendbar sein im Sinne, dass der Klebstoff beim Trennen der Verbindung von zwei Elementen zumindest zum Teil auf einem oder beiden Elementen verbleibt und bei einem erneuten Verbinden dieser beiden Elemente oder von einem der beiden Elemente mit einem anderen Element erneut eine Klebwirkung verursacht. Der Klebstoff, insbesondere Haftvermittler, kann beispielsweise im Siebdruck und/oder auf einem doppelseitigen Klebeband und/oder im Spritzguss aufgebracht sein. Bevorzugt ist der ablösbare Klebstoff ein Haftklebstoff. Haftklebstoffe sind dem Fachmann bekannt.

Alternativ oder zusätzlich kann ein Haftvermittler zum Anbringen der elektronischen Elemente, insbesondere von Leiterbahnen, an die Trägerschicht verwendet werden. Beispielsweise kann ein Haftvermittler verwendet werden, um die Adhäsion von Leiterbahnen und/oder anderen elektronischen Elementen herzustellen, die zumindest teilweise aus Silberleitpasten hergestellt sind. Beispielsweise können nach Trocknung des auf die Trägerschicht aufgebrachten Haftvermittlers, zum Beispiel ebenfalls im Siebdruck, Silberleitpasten in Form vom Leiterbahnen und/oder kapazitiven Sensorelementen aufgebracht werden. Es können beispielsweise Silberleitpasten mit in Dickfilmpolymeren gelösten Silberflakes verwendet werden. Gegebenenfalls können auch siebdruckbare Dielelektrika und/oder transparente Schutzlacken eingesetzt werden. Auch ist zum Beispiel die Verwendung von Silberleitpasten mit Nanosilber, Leitpasten mit Carbon Nano Tubes, PEDOT (Poly-3,4-ethylendioxythiophen)-Pasten oder Kupferleitpasten möglich.

Nach entsprechender Trocknungsphase der Siebdruckschichten können elektronische Elemente wie LEDs, Dioden, Widerstände, etc. per SMT (engl: Surface Mounted Technology / deutsch: Oberflächenmontage) - Bestückung aufgebracht werden. Hier werden vorteilhaft zuerst Klebepunkte mit leitfähigem Kleber und zusätzlichem Strukturkleber auf die Trägerschicht aufgebracht. Die elektronischen Elemente werden dann bevorzugt auf die Klebepunkte gesetzt und vorteilhaft zuletzt die Trägerschicht mit den bestückten elektronischen Elementen noch einmal einem Trocknungsprozess unterzogen. Die elektronischen Elemente wie LEDs, Dioden, Widerstände, etc. können alternativ oder zusätzlich zur SMT-Bestückung, per Durchsteckmontage oder Einsteckmontage (engl: Through-hole technology), durch Flip-Chip-Montage und/oder durch Drucken (deutsch: Gedruckte Elektronik / engl: Printed electronics) aufgebracht werden. Die Durchsteckmontage oder Einsteckmontage, die Flip-Chip-Montage sowie das Drucken von elektronischen Elementen sind dem Fachmann bekannt.

Die Leiterbahnen können auch mit Leitpasten und/oder Leittinten im Digitaldruck aufgebracht werden. Die elektronischen Elemente wie insbesondere Widerstände können auch mit organischen Pasten im Siebdruck aufgebrachten werden. Anstatt die Klebepunkte beim SMT-Bestücken aufzubringen können diese auch in einem vorhergehenden Prozessschritt im Siebdruck partiell aufgebracht werden (z.B. mit einem Stensil-Sieb).

Die verschiedenen oben erwähnten Befestigungsarten zum Anbringen der ersten und der zweiten Bauteileinheit aneinander können selbstverständlich auch in Kombination miteinander angewandt werden. Beispielsweise kann die erste Bauteileinheit auf die zweite Bauteileinheit aufgesteckt sowie zusätzlich mittels Festklemmung und/oder eines Klebstoffs an der zweiten Bauteileinheit befestigt sein. Eine Vielzahl von lösbaren Befestigungsmöglichkeiten sowie von Kombinationen davon sind denkbar.

In einer insbesondere bevorzugten Ausführungsform weist der Lichtleiter eine oder mehrere vorgefertigte Vertiefungen und/oder eine oder mehrere vorgefertigte durchgehende Öffnungen aufweist, in welche jeweils zumindest eines des bzw. der Leuchtelemente hineinragt. Die Vorfertigung der Vertiefungen kann insbesondere im Rahmen einer Spritzgussherstellung des Lichtleiters stattfinden, das heisst die Vertiefungen können zum Beispiel als entsprechende Vorsprünge an der Spritzgussform vorgesehen sein. Alternativ oder zusätzlich können die Vertiefungen aber auch nachträglich zur eigentlichen Herstellung des Lichtleiters ausgebildet werden, zum Beispiel mittels Materialabtragung.

In anderen Ausführungsformen können die Vertiefungen auch erst beim Zusammenbau des Bauteils im Lichtleiter ausgebildet werden. So kann der Lichtleiter beim Zusammenbau zum Beispiel eine erhöhte Temperatur aufweisen und dadurch leicht verformbar sein, um ein zumindest teilweises Eindrücken der Leuchtelemente in den Lichtleiter zu erlauben.

Je nach Ausführungsform kann jede der im Lichtleiter vorgesehenen Vertiefungen jeweils einem Leuchtelement zugeordnet sein, oder es können mehrere Leuchtelemente in jeweils eine gemeinsame Vertiefung hineinragen.

Um dem Bauteil ein hochwertiges Aussehen zu verleihen und/oder um die weiteren Bauteilelemente und insbesondere die erste Bauteileinheit vor äusseren Einflüssen zu schützen, kann die Sichtseite des Bauteils zumindest teilweise, bevorzugt vollständig, von einer Lackschicht gebildet sein. Die Lackschicht kann lichtdurchlässig und/oder opak ausgebildet sein. Falls sie lichtdurchlässig ausgebildet ist, kann sie eingefärbt sein, um bestimmte optische Effekte zu erzeugen. Falls ein Dekorelement vorhanden ist, ist die Lackschicht bevorzugt direkt auf diesem aufgetragen. Da Lackschichten oft aufwändig in der Herstellung und teuer bzgl. des Materials sind, ist es besonders vorteilhaft, wenn das Bauteil, wie im vorliegenden Falls, einfach auseinandernehmbar und recyclierbar ist.

Im Falle, dass es sich beim Bauteil um ein Interieurbauteil handelt, ist die Lackschicht bevorzugt aus einem Softlack oder aus einem kratzfesten Lack, bevorzugter aus einem kratzfesten Lack, hergestellt. Der Softlack weist bevorzugt einen Härtegrad von weniger als 20 Shore-A auf, welcher bevorzugt gemäss der Norm DIN 53505, Ausgabe vom August 2000, gemessen ist. Der kratzfeste Lack weist bevorzugt einen Härtegrad von 20 Shore-A bis 100 Shore-D, insbesondere von 20 Shore-A bis 65 Shore-D, auf, wobei der Härtegrad jeweils bevorzugt gemäss der Norm DIN 53505, Ausgabe vom August 2000, gemessen ist. Im Falle eines Exterieurbauteils ist die Lackschicht bevorzugt aus einem kratzfesten Lack hergestellt und weist bevorzugt einen Härtegrad von 20 Shore-A bis 100 Shore-D, insbesondere von 20 Shore-A bis 65 Shore-D, auf, wobei der Härtegrad jeweils bevorzugt gemäss der Norm DIN 53505, Ausgabe vom August 2000, gemessen ist. Falls es sich um ein Exterieurbauteil handelt, weist dieses bevorzugt zumindest eine semipermeable Membran auf, um Feuchtigkeit aus dem Bauteil entweichen zu lassen, ohne dass von aussen her Feuchte in das Bauteil eindringen kann. Ausserdem kann die Trägerschicht im Falle eines Exterieurbauteil insbesondere aus Polycarbonat hergestellt sein mit bevorzugt einer Erweichungstemperatur von mehr als 130°, bevorzugter von mehr als 140° und am bevorzugtesten von ca. 145°.

Nach einer Weiterbildung der Erfindung weist die Lackschicht eine einzige Schicht oder wenigstens zwei Schichten auf. Im Falle von wenigstens zwei Schichten liegen die wenigstens Schichten bevorzugt wenigstens teilweise übereinander.

Die Trägerschicht kann einschichtig oder mindestens zweischichtig aufgebaut sein. Im Falle von wenigstens zwei Schichten liegen die wenigstens zwei Schichten bevorzugt wenigstens teilweise übereinander.

Gemäss einer insbesondere bevorzugten Ausführungsform bildet die Trägerschicht eine dreidimensional geformte Struktur mit zumindest einer Erhebung oder Vertiefung, insbesondere bevorzugt mit einer Vielzahl von lokalen Erhebungen und Vertiefungen. Beispielsweise kann die Trägerschicht insgesamt eine Wölbung, das heisst eine Erhebung, bilden. Die Trägerschicht kann aber auch eine Vielzahl von lokalen Erhebungen und Vertiefungen bilden, um beispielsweise ein Symbol oder einen Schriftzug darzustellen oder um das Bauteil an eine entsprechend strukturierte Oberfläche eines Fahrzeugs oder einer anderen Vorrichtung anzupassen. Eine dreidimensional geformte Struktur mit zumindest einer Erhebung oder Vertiefung, insbesondere bevorzugt mit einer Vielzahl von lokalen Erhebungen und Vertiefungen, können alternativ oder zusätzlich auch der Lichtleiter sowie, falls vorhanden, die Diffusorschicht und/oder die reflektierende Schicht aufweisen.

Bevorzugt weist die Trägerschicht, bevorzugter die Vorderseite der Trägerschicht, noch bevorzugter die Trägerschicht sowie der Lichtleiter, noch bevorzugter die Vorderseite der Trägerschicht und des Lichtleiters, wenigstens teilweise, bevorzugt im Wesentlichen vollständig, dieselbe dreidimensional geformte Struktur auf wie die Sichtseite des Bauteils, insbesondere wie die Vorderseite des Dekorelementes, auf. Dies bietet den Vorteil, dass die Sichtseite des Bauteils, insbesondere die Vorderseite des Dekorelementes, optimal, insbesondere homogen, ausgeleuchtet werden kann. Alternativ oder zusätzlich können auch, falls vorhanden, die Diffusorschicht und/oder die reflektierende Schicht, bevorzugt die Vorderseite der Diffusorschicht und/oder die Vorderseite der reflektierenden Schicht, wenigstens teilweise, bevorzugt im Wesentlichen vollständig, dieselbe dreidimensional geformte Struktur aufweisen wie die Sichtseite des Bauteils, insbesondere wie die Vorderseite des Dekorelementes. In diesem Fall ist die Ausleuchtung der Sichtseite des Bauteils, insbesondere der Sichtseite des Dekorelementes, besonders gut, insbesondere homogen. Falls die Trägerschicht, der Lichtleiter, die Diffusorschicht oder die reflektierende Schicht eine dreidimensional geformte Struktur aufweist, so ist die Trägerschicht, der Lichtleiter, die Diffusorschicht oder die reflektierende Schicht bevorzugt jeweils aus einem Material mit einer guten Umformbarkeit und Lichtdurchlässigkeit, wie zum Beispiel Silikon, insbesondere Silikonkautschuk, oder einem thermoplastischen Elastomer, hergestellt und weist bevorzugt jeweils eine Dicke von 1.8 mm oder geringer, noch vorteilhafter 1.5 mm oder geringer, noch vorteilhafter 1.2 mm oder geringer, noch vorteilhafter 1 mm oder geringer, noch vorteilhafter 0.8 mm oder geringer, noch vorteilhafter 0.75 mm oder geringer, noch vorteilhafter 0.6 mm oder geringer, insbesondere 0.5 mm, noch vorteilhafter 0.4 mm oder geringer, insbesondere 0.375 mm, am vorteilhaftesten 0.3 mm oder geringer, insbesondere 0.2 mm, auf. Das genannte Material sowie die genannten Dicken erlauben eine besonders gut Umformbarkeit der Trägerschicht, des Lichtleiters, der Diffusorschicht oder der reflektierenden Schicht, wobei im Falle der Trägerschicht, des Lichtleiters und der Diffusorschicht gleichzeitig eine gute Lichtdurchlässigkeit gewährleistet ist. Eine weitere Verbesserung der Umformbarkeit kann erzielt werden, falls die Trägerschicht, der Lichtleiter, die Diffusorschicht sowie die lichtreflektierende Schicht durch eine Folie, insbesondere Mehrschichtfolie, gebildet ist. In diesem Falle ist eine gute Lichtdurchlässigkeit bei der Trägerschicht, des Lichtleiters sowie der Diffusorschicht weiterhin gegeben. Um bei der Herstellung des Bauteils die Ausbildung der dreidimensional geformten Struktur noch besser zu ermöglichen oder zumindest zu vereinfachen, kann die Trägerschicht, der Lichtleiter, die Diffusorschicht oder die reflektierende Schicht, einen oder mehrere Durchbrüche und/oder eine oder mehrere lokale Verdünnungen, d.h. Schwächungen, aufweisen. Dies wird im nun folgenden Abschnitt anhand der Trägerschicht beispielhaft genauer erläutert.

Um bei der Herstellung des Bauteils die Ausbildung der dreidimensional geformten Struktur zu ermöglichen oder zumindest zu vereinfachen, kann die Trägerschicht einen oder mehrere Durchbrüche und/oder eine oder mehrere lokale Verdünnungen, d.h. Schwächungen, aufweisen. Der eine oder die mehreren Durchbrüche und/oder die eine oder die mehreren lokalen Verdünnungen können alternativ oder zusätzlich auch dazu dienen, ein Symbol oder einen Schriftzug darzustellen. Aufgrund des bzw. der Durchbrüche und/oder der Verdünnung(en) wird das durch die Trägerschicht hindurchtretende Licht weniger stark abgeschwächt, was beim Betrachter bei entsprechender Formung des/der Durchbrüche bzw. der Verdünnung(en) als Symbol oder Schriftzug erkennbar sein kann. Entsprechende Durchbrüche und/oder Verdünnungen können alternativ oder zusätzlich auch der Lichtleiter sowie, falls vorhanden, die Diffusorschicht und/oder die reflektierende Schicht aufweisen. Der eine oder die mehreren Durchbrüche und/oder der eine oder die mehreren lokalen Verdünnungen können vor, während oder nach dem Anbringen der elektronischen Elemente auf die Trägerschicht in die Trägerschicht eingebracht werden. Ein Bestandteil des erfindungsgemässen Bauteils, insbesondere die Trägerschicht, der Lichtleiter, die Diffusorschicht oder die reflektierende Schicht, kann somit besonders gut in eine dreidimensional geformte Struktur gebracht werden, falls der Bestandteil aus einem Material mit einer guten Umformbarkeit, wie zum Beispiel Silikon, insbesondere Silikonkautschuk, oder einem thermoplastischen Elastomer, hergestellt ist und wenigstens einen Durchbruch und/oder wenigstens eine Verdünnung aufweist sowie eine Dicke von 1.8 mm oder geringer, noch vorteilhafter 1.5 mm oder geringer, noch vorteilhafter 1.2 mm oder geringer, noch vorteilhafter 1 mm oder geringer, noch vorteilhafter 0.8 mm oder geringer, noch vorteilhafter 0.75 mm oder geringer, noch vorteilhafter 0.6 mm oder geringer, insbesondere 0.5 mm, noch vorteilhafter 0.4 mm oder geringer, insbesondere 0.375 mm, am vorteilhaftesten 0.3 mm oder geringer, insbesondere 0.2 mm, aufweist.

Als weitere Möglichkeit zur Darstellung eines Symbols und/oder eines Schriftzuges kann die Trägerschicht einen oder mehrere opake Bereiche sowie einen oder mehrere lichtdurchlässige Bereiche aufweisen. Auch das Vorsehen von unterschiedlich eingefärbten Bereichen der Trägerschicht kann demselben Zweck dienen. Alternativ oder zusätzlich zur Darstellung eines Symbols oder eines Schriftzugs kann das Vorsehen eines opaken Bereiches dazu dienen, ein rückseitig dahinter angeordnetes Bauteilelement, wie insbesondere ein elektronisches Element, zum Beispiel ein Leuchtelement, zu verdecken.

Falls die Trägerschicht wenigstens bereichsweise lichtdurchlässig ausgebildet ist, so ist der lichtdurchlässige Bereich bevorzugt aus Kunststoff hergestellt. Der Kunststoff weist bevorzugt wenigstens einen Thermoplasten und/oder wenigstens einen Duroplasten und/oder wenigstens ein Silikon, insbesondere Silikonkautschuk, und/oder wenigstens ein thermoplastisches Elastomer oder eine Mischung der genannten Substanzen auf. Falls die Trägerschicht wenigstens bereichsweise lichtdurchlässig ausgebildet ist, so ist gemäss einer bevorzugten Ausführungsform der lichtdurchlässige Bereich der Trägerschicht aus einem einzigen Thermoplasten, aus einem einzigen Duroplasten oder aus einem einzigen Silikon, insbesondere Silikonkautschuk, oder aus einem einzigen thermoplastischen Elastomer hergestellt. Dies bietet den Vorteil, dass das Bauteil kostengünstig herstellbar ist und das Licht keine Materialgrenzflächen überwinden muss.

Falls der Kunststoff, welcher den lichtdurchlässigen Bereich der Trägerschicht bildet, einen Thermoplasten aufweist, so ist der Thermoplast beispielsweise Polycarbonat (PC), Polystyrol (PS), ein aromatischer Polyester, Polymethylmethacrylat (PMMA), Polyethylenterephthalat (PET), Polymethacrylmethylimid (PMMI), ein Cyclo-Olefin-Copolymer (COC), ein Cyclo-Olefin- Polymer (COP), ein Styrol-Acrylnitril-Copolymer (SAN) oder eine Mischung der genannten Polymere. Falls der Kunststoff, welcher den lichtdurchlässigen Bereich der Trägerschicht bildet, einen Duroplasten aufweist, so ist der Duroplast beispielsweise Polyurethan (PU) oder Polyurea (PUA). Der Kunststoff, welcher den lichtdurchlässigen Bereich der Trägerschicht bildet, kann beispielsweise auch Silikon, insbesondere Silikonkautschuk, oder ein thermoplastisches Elastomer, aufweisen. Dem Fachmann sind lichtdurchlässige, das heisst transluzente oder transparente Kunststoffe bekannt. Bei der Verwendung von Silikon, insbesondere Silikonkautschuk, oder einem thermoplastischem Elastomer, ergibt sich eine gute Anpassbarkeit der Trägerschicht zum Beispiel an eine Oberfläche des Lichtleiters. Polymethylmethacrylat (PMMA) hat sich als besonders gut im Hinblick auf die Bearbeitung mittels eines Lasers, insbesondere zur Herstellung von Lichtumlenkstrukturen, erwiesen. Polycarbonat (PC) kann ebenfalls mittels eines Lasers, insbesondere zur Herstellung von Lichtumlenkstrukturen, bearbeitet werden. Styrol-Acrylnitril- Copolymer (SAN) ist ebenfalls gut zur Bearbeitung mittels eines Lasers, insbesondere zur Herstellung von Lichtumlenkstrukturen. Gemäss einer bevorzugten Ausführungsform ist die Trägerschicht wenigstens bereichsweise, bevorzugt vollständig, aus Polycarbonat (PC) hergestellt.

Es ist auch möglich, dass im Wesentlichen die gesamte Trägerschicht, bevorzugt die gesamte Trägerschicht opak ausgebildet ist. Falls im Wesentlichen die gesamte Trägerschicht, bevorzugt die gesamte Trägerschicht, opak ausgebildet ist, so ist bevorzugt im Wesentlichen die gesamte Trägerschicht, bevorzugt die gesamte Trägerschicht, aus Kunststoff hergestellt. Die Trägerschicht kann aus wenigstens zwei unterschiedlichen Kunststoffen hergestellt sein.

Falls die Trägerschicht einen opaken Bereich aufweist, so ist dieser opake Bereich bevorzugt aus einem Kunststoff hergestellt. Der Kunststoff weist bevorzugt wenigstens einen Thermoplasten und/oder wenigstens einen Duroplasten und/oder wenigstens ein Silikon, insbesondere Silkonkautschuk, und / oder wenigstens ein thermoplastisches Elastomer oder eine Mischung der genannten Substanzen auf. Der opake Bereich kann beispielsweise mittels eines Kunststoffs, wie beispielsweise Acrylnitril-Butadien-Styrol (ABS), Polypropylen (PP) oder Polyethylen (PE), hergestellt sein. Die opake Schicht kann beispielsweise auch aus Polycarbonat (PC) oder Polymethylmethacrylat (PMMA) hergestellt sein, welches mit Zusatzstoffen, wie beispielsweise mit Russ, opak gemacht ist. Dem Fachmann sind opake Kunststoffe bekannt.

Bei vielen Ausführungsformen weist das Bauteil bevorzugt einen Träger auf, welcher zum Tragen der ersten Bauteileinheit und/oder der zweiten Bauteileinheit dient, und welcher bevorzugt eine Vertiefung bildet, in welcher die zweite Bauteileinheit, insbesondere der Lichtleiter, aufgenommen ist. Das heisst, die zweite Bauteileinheit, insbesondere der Lichtleiter, ist bevorzugt in den Träger eingelegt. Aufgrund der Vertiefung umrandet der Träger die zweite Bauteileinheit, insbesondere den Lichtleiter, seitlich bevorzugt zumindest teilweise, bevorzugter vollständig. Durch das Vorsehen einer Vertiefung ist die zweite Bauteileinheit besonders gut im Träger haltbar.

Gemäss einer Weiterbildung der Erfindung weist das Bauteil eine seitlich umlaufende opake Umwandung auf zur Verhinderung von seitlich, insbesondere aus dem Lichtleiter (30) und/oder der Trägerschicht austretendem Lecklicht. Die Umrandung ist bevorzugt durch einen Träger zum Tragen der ersten Bauteileinheit und/oder der zweiten Bauteileinheit ausgebildet. Das Bauteil kann insbesondere derart ausgebildet sein, dass Licht ausschliesslich zur Sichtseite hin, das heisst im bestimmungsgemässen Gebrauchszustand in Richtung zum Betrachter hin, austreten kann.

Gemäss einer anderen Weiterbildung der Erfindung weist das Bauteil ein für einen Betrachter sichtbares Dekorelement auf, das lösbar an der ersten Bauteileinheit und/oder der zweiten Bauteileinheit angebracht ist. Die Anbringung des Dekorelements an der ersten und/oder der zweiten Bauteileinheit kann insbesondere mechanisch und/oder mit Hilfe eines ablösbaren Klebstoffs erfolgen. Bevorzugt ist das Dekorelement lichtdurchlässig, so dass das Licht nach dem Hindurchtreten durch die Trägerschicht direkt oder indirekt, das heisst nach dem Hindurchtreten durch eines oder mehrere weitere Elemente, durch das Dekorelement zu Sichtseite hin nach aussen tritt. Das Dekorelement kann dabei eingefärbt sein, um bestimmte optische Effekte zu erzielen. Bei gewissen Ausführungsformen kann das Dekorelement auch opak sein und beispielsweise nur einen Teil der Sichtseite bilden. Es kann dann Durchbrüche und/oder lichtdurchlässige Bereiche aufweisen, um eine Hinterleuchtung des Bauteils dennoch zu ermöglichen. Das Dekorelement kann direkt auf der Trägerschicht aufliegen oder auch in einem Abstand zu dieser angeordnet sein. Falls das Bauteil eine Lackschicht aufweist, ist diese bevorzugt auf dem Dekorelement aufgebracht. Denkbar ist auch, dass die Trägerschicht selbst das Dekorelement bildet.

Bevorzugt weist das Bauteil eine oder mehrere Lichtumlenkstrukturen auf, welche zum Umlenken, insbesondere zum gezielten Umlenken, des von dem zumindest einen Leuchtelement eingestrahlten Lichts zur Sichtseite hin dienen. Die Lichtumlenkstrukturen können insbesondere durch den Lichtleiter, die Trägerschicht, das Dekorelement und/oder eine reflektierende Schicht gebildet sein, wobei sie jeweils an einer Oberfläche und/oder im Inneren des jeweiligen Elements ausgebildet sind. In einer insbesondere bevorzugten Ausführungsform sind die Lichtumlenkstrukturen mittels eines Lasers hergestellt. Falls die Lichtumlenkstrukturen durch eine reflektierende Schicht gebildet werden, liegt diese bevorzugt direkte an einer Oberfläche, insbesondere der Rückseite, des Lichtleiters an. Eine reflektierende Schicht kann beispielsweise durch eine Spiegelfolie gebildet sein und dient bevorzugt dazu, das Licht zum Lichtleiter hin zu reflektieren Die Lichtumlenkstrukturen können, insbesondere falls diese im Inneren des Lichtleiters angeordnet sind, auch durch Partikel und/oder Pigmente gebildet sein.

Falls eine oder mehrere Lichtumlenkstrukturen vorhanden sind, können diese, von der Sichtseite her gesehen, jeweils allein oder gemeinsam eines oder mehrere Symbole oder Schriftzüge bilden. Es ergeben sich daraus vielfältige Möglichkeiten in der Gestaltung des Bauteils.

Gemäss einer Weiterbildung der Erfindung können die eine oder die mehreren Lichtumlenkstrukturen insbesondere innerhalb eines lichtdurchlässig ausgebildeten Bereiches der Trägerschicht und/oder des Lichtleiters angeordnet sein. Falls vorhanden können die eine oder die mehreren Lichtumlenkstrukturen alternativ oder zusätzlich auch innerhalb eines lichtdurchlässig ausgebildeten Bereiches der Diffusorschicht, des Dekorelements und/oder der Lackschicht angeordnet sein. Die Lichtumlenkstrukturen sind dann besonders sicher vor physikalischen und chemischen Beschädigungen. Vorteilhaft werden die Lichtumlenkstrukturen dann mittels eines Lasers gebildet.

Die eine oder die mehreren Lichtumlenkstrukturen können aber auch, um die Herstellung insbesondere im Spritzgussverfahren zu vereinfachen, an einer Oberfläche der Trägerschicht und/oder des Lichtleiters und/oder, falls vorhanden, des Dekorelements, der Lackschicht und/oder der Diffusorschicht angeordnet sein. Die Lichtumlenkstrukturen können in diesem Fall zum Beispiel an einer inneren Oberfläche eines Spritzgusswerkzeugs ausgebildet sein. Falls die entsprechende Schicht zum Beispiel mittels Extrusion hergestellt wird, was denkbar ist, kann ein Werkzeugeinsatz mit Erhebungen und/oder Vertiefungen verwendet werden, um die Lichtumlenkstrukturen auszubilden. Die an der Oberfläche angeordneten Lichtumlenkstrukturen können aber auch mittels eines Lasers oder mittels eines Prägeverfahrens hergestellt werden, oder sie können eingefräst, erodiert, wie beispielsweise durch Elektroerosion, eingeätzt oder aufgedruckt werden.

Vorzugsweise sind die Lichtumlenkstrukturen durch eine lokale Materialveränderung, insbesondere durch eine Aufschmelzung des Materials hergestellt. Das Material wird zur Herstellung der Lichtumlenkstrukturen also vorzugsweise an den entsprechenden Stellen mittels Wärmeeinwirkung aufgeschmolzen und wieder abgekühlt. Es wird dadurch an den jeweiligen Stellen eine lokale Strukturveränderung des Materials bewirkt, wodurch die Lichtumlenkstrukturen gebildet werden. Das Material wird dabei vorzugsweise aber nicht karbonisiert.

Falls Lichtumlenkstrukturen vorhanden sind, sind diese bevorzugt nebeneinander in einer gemeinsamen Ebene angeordnet und weisen dabei vorteilhaft alle dieselbe Orientierung auf. Es können zwei oder mehrere Ebenen innerhalb der entsprechenden Schicht vorhanden sein, in welchen jeweils eine Vielzahl von Lichtumlenkstrukturen in jeweils vorteilhaft derselben Orientierung angeordnet sind. Mittels einer oder mehreren Schichten mit jeweils in zwei oder mehreren Ebenen von Lichtumlenkstrukturen können verschiedenste Lichteffekte erzeugt werden.

Um eine optimale Form der Lichtumlenkstrukturen insbesondere dann zu erreichen, wenn diese im Inneren einer Schicht angeordnet sind, werden die Lichtumlenkstrukturen bevorzugt mit Hilfe von grünem Laserlicht und/oder von Infrarot-Laserlicht hergestellt. Vorzugweise weist das grüne Laserlicht eine Wellenlänge im Bereich von 490 nm - 575 n, insbesondere von ca. 532 nm, auf. Das Infrarot-Laserlicht weist vorteilhaft eine Wellenlänge im Bereich von 780 nm - 1400 nm, vorteilhafter im Bereich von 1000 nm - 1100 nm, insbesondere von ca. 1030 nm, auf. Infrarot-Laser sind in der Anschaffung günstig und besonders prozessstabil. Vorteilhaft wird ein Ultrakurzpulslaser, bevorzugter ein Femtosekundenlaser oder ein Pikosekundenlaser, verwendet. Bevorzugt ist der Grundkörper der Lichtumlenkstrukturen jeweils im Wesentlichen rotationssymmetrisch, insbesondere vollständig rotationssymmetrisch. Die Lichtumlenkstrukturen sind dadurch einfacher herstellbar, und die durch die Lichtumlenkstrukturen bewirkte Lichtumlenkung ist einfacher vorausrechenbar. Es kann insbesondere eine Leuchtdichtesimulationssoftware erstellt werden, um die Leuchtdichte an der Oberfläche und insbesondere an der Lichtauskoppelfläche eines Lichtleiters vorauszuberechnen, bzw. um umgekehrt dazu ausgehend von einer gewünschten Oberflächenleuchtdichte die Anordnung und/oder Ausbildung der Lichtumlenkstrukturen innerhalb des Lichtleiters zu bestimmen. Auf diese Art und Weise kann sehr einfach eine beliebige gewünschte Leuchtdichteverteilung an der Lichtleiteroberfläche erzielt werden. Durch die Rotationssymmetrie des Grundkörpers ist die Längsachse der jeweiligen Lichtumlenkstruktur bestimmt, welche mit der Symmetrieachse übereinstimmt. Unter dem Begriff "Leuchtdichte" wird das Verhältnis der Lichtstärke zur Grösse der sichtbaren leuchtenden Lichtauskoppelfläche verstanden, welche in Candela pro Quadratmeter der Lichtauskoppelfläche (cd/m²) angegeben wird.

Die im Inneren einer jeweiligen Schicht angeordneten Lichtumlenkstrukturen weisen bevorzugt jeweils einen langgestreckten, insbesondere im Wesentlichen rotationssymmetrischen, Grundkörper mit einer oder mehreren daran angebrachten Elementen in Form von Fahnen auf. Vorteilhaft erstreckt sich die zumindest eine Fahne über 1/3 bis 2/3 der gesamten Längserstreckung des Grundkörpers. Die zumindest eine Fahne kann dabei insbesondere entlang einer ihrer Seiten über einen Bereich von 1/3 bis 2/3 der gesamten Längserstreckung des Grundkörpers mit diesem verbunden sein. Die Breite der Fahne, gemessen in eine senkrecht zur Längsachse des Grundkörpers stehende Richtung, beträgt bevorzugt höchstens 30 Mikrometer. Bevorzugt sind zumindest jeweils zwei Fahnen auf im Wesentlichen diametral einander gegenüberliegenden Seiten am Grundkörper angebracht. Die eine oder mehreren Fahnen bilden vorteilhaft als Ganzes jeweils eine im Wesentlichen ebene Fläche, die sich vom Grundkörper aus in eine radiale Richtung nach aussen hin erstreckt. Vorteilhaft ist der Grundkörper einteilig oder mehrteilig, bevorzugt einteilig ausgebildet. Der Grundkörper ist vorteilhaft entlang seiner Längsrichtung um ein Vielfaches grösser dimensioniert als in die senkrecht zu dieser Längsrichtung stehenden Richtungen. Der Grundkörper kann zudem entlang seiner Längsrichtung jeweils eine lokale Verdickung aufweisen, die in Bezug auf die Längsrichtung des Grundkörpers bevorzugt bei 15 - 35 Prozent der gesamten Längserstreckung des Grundkörpers angeordnet ist. Die Grundkörper der Lichtumlenkstrukturen weisen bevorzugt jeweils eine Längserstreckung von mindestens 100 Mikrometer, bevorzugter von mindestens 300 Mikrometer, auf. Die im Inneren der Schicht angeordneten Lichtumlenkstrukturen können insbesondere entsprechend den Angaben in der WO 2017/174548 A1 ausgebildet sein, deren kompletter Inhalt hiermit unter Bezugnahme miteinbezogen wird. Es hat sich gezeigt, dass Lichtstrahlen, welche insbesondere seitlich, das heisst aus einer im Wesentlichen senkrecht zur Längsrichtung der Lichtumlenkstrukturen stehenden Richtung, auf eine der derart ausgebildeten Lichtumlenkstrukturen auftreffen, eine Umlenkung zur Längsrichtung der Lichtumlenkstruktur hin erfahren. Konkret wird das Licht dabei jeweils zur Längsachse des Grundkörpers hin umgelenkt, welche sich zentral in Längsrichtung durch den Grundkörper hindurch erstreckt. Durch das Vorsehen einer Vielzahl von derartigen Lichtumlenkstrukturen in einer jeweiligen Schicht kann somit eine gezielte Lichtumlenkung des eingestrahlten Lichts in eine oder mehrere bestimmte Richtungen erreicht werden. Das Licht kann dadurch in eine oder mehrere einstellbare Richtungen aus der Schicht ausgekoppelt werden. Je nach Ausrichtung und Lage der Lichtumlenkstrukturen kann die Lichtauskopplung derart eingestellt werden, dass sie zum Beispiel fokussiert aus der Schicht in eine bestimmte Richtung oder diffus in einen bestimmten Richtungsbereich erfolgt. Die an der Oberfläche einer Schicht angeordneten Lichtumlenkstrukturen können insbesondere entsprechend den Angaben in der EP 2 853 806 A1 ausgebildet sein, deren kompletter Inhalt hiermit unter Bezugnahme miteinbezogen wird.

Falls eine oder mehrere Lichtumlenkstrukturen vorhanden sind, wird das vom Leuchtelement ausgestrahlte Licht von dieser bzw. diesen vorteilhaft derart umgelenkt, dass es, bevorzugt direkt, das heisst ohne weiteren Umlenkungen und/oder Reflexionen und/oder Streuungen, sowohl durch die Trägerschicht sowie gegebenenfalls die Diffusorschicht, das Dekorelement und/oder die Lackschicht hindurchtritt. Bevorzugt tritt das Licht dabei, insbesondere auf geradem Weg, zuerst durch die Trägerschicht, auf welche die elektronischen Elemente aufgebracht sind, und/oder gegebenenfalls die Diffusorschicht, das Dekorelement und/oder die Lackschicht hindurch.

Bei einem nicht erfindungsgemässen hinterleuchtbaren Bauteil, das wie oben angegeben ausgebildet ist, kann die erste Bauteileinheit statt lösbar auch unlösbar an der zweiten Bauteileinheit angebracht sein. Die erste Bauteileinheit, insbesondere die Trägerschicht, kann in diesem Fall zum Beispiel mittels Laserschweissen und/oder Heissprägung, an der zweiten Bauteileinheit, insbesondere am Lichtleiter, befestigt sein.

Die vorliegende Erfindung bezieht sich ausserdem auf ein Verfahren zur Herstellung eines hinterleuchtbaren Bauteils, insbesondere eines hinterleuchtbaren Bauteils wie es oben angegeben ist, mit einer Sichtseite und einer Rückseite, aufweisend folgende Schritte:
- Bereitstellen einer ersten Bauteileinheit, welche eine lichtdurchlässige Trägerschicht, insbesondere Trägerfolie, sowie rückseitig an der Trägerschicht angebrachte elektronische Elemente mit zumindest einem Leuchtelement umfasst,
- Bereitstellen einer zweiten Bauteileinheit, welche einen Lichtleiter umfasst, sowie
- Anbringen der ersten Bauteileinheit an der zweiten Bauteileinheit derart, dass die zweite Bauteileinheit rückseitig zur ersten Bauteileinheit angeordnet ist und dass das zumindest eine Leuchtelement zumindest teilweise in den Lichtleiter hineinragt und dadurch derart zur Einstrahlung von Licht in den Lichtleiter ausgebildet ist, dass das eingestrahlte Licht mittels Umlenkung durch die Trägerschicht hindurch zur Sichtseite hin abgestrahlt wird.

Die erste Bauteileinheit wird dabei lösbar an der zweiten Bauteileinheit angebracht.

Das Verfahren kann ausserdem den Schritt aufweisen, dass die Trägerschicht mit oder ohne die daran angebrachten elektronischen Komponenten druck- und/oder heissumgeformt und/oder zugeschnitten wird.

Bei der Druck- und/oder Heissumformung handelt es sich bevorzugt um eine Thermoumformung oder eine Vakuumformung. Die Druck- und/oder Heissumformung kann insbesondere durch das Spritzgussverfahren erfolgen, also zum Beispiel im Spritzgiesswerkzeug erfolgen und durch den Anspritzdruck verursacht sein. Auch eine mechanische Druckumformung mit zum Beispiel einem Stempel ist denkbar für die Druck- und/oder Heissumformung. Vorzugsweise wird die Trägerschicht bei der Druck- und/oder Heissumformung auf Glasübergangstemperatur erwärmt und danach vorteilhaft in einer abgeschlossenen Formkammer mit einem Hochdruck in einem bevorzugten Bereich von ca. 50- 200 bar beaufschlagt, insbesondere schlagartig mit einem solchen Hochdruck beaufschlagt. Bevorzugt folgt dann eine Abkühlphase. Alternativ oder zusätzlich kann zur Druck- und/oder Heissumformung auch ein Vakuumformen oder ein Hy-Tech Forming angewandt werden, bei welchem mit Arbeitsdrücken um 50 bar gearbeitet wird.

Die Druck- und/oder Heissumformung kann auch eine rein zylindrische Verformung sein. Hierzu kann zum Beispiel die als 2D-Folie ausgebildete Trägerschicht im Spritzgusswerkzeug in eine zylindrisch ausgeführte Werkzeugkavität eingelegt und in dieser mittels Vakuum gehalten werden. Nach dem Einspritzen des Kunststoffs zur Ausbildung von zum Beispiel einer lichtdurchlässigen Schicht behält das fertige Bauteil seine zylindrische Form.

Für das Zuschneiden der Trägerschicht können insbesondere einer oder mehrere der folgenden Verfahrensschritte durchgeführt werden: Stanzen mittels eines Stanzwerkzeugs auf Exzenter- oder hydraulischen Pressen, Beschnitt mittels hydraulischer, pneumatischer oder mechanischer produktspezifischer Schneidanlage, Lasern, Händischer Beschnitt, Fräsen, Ultraschallschneiden, Schneidplotten, Stanzen mittels Stanzmesser auf z.B. einer Schwenkarmstanze oder Wasserstrahlschneiden.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1: eine schematische Querschnittsansicht eines erfindungsgemässen hinterleuchtbaren Bauteils gemäss einer ersten Ausführungsform;
- Fig. 2a: eine schematische Seitenansicht einer teilweise aufgerollten Trägerschicht, die zur Herstellung eines erfindungsgemässen hinterleuchtbaren Bauteils verwendet wird;
- Fig. 2b: eine schematische Seitenansicht der Trägerschicht der Fig. 2a, nach Bestückung mit elektronischen Elementen;
- Fig. 3a: eine schematische Seitenansicht einer zugeschnittenen Trägerschicht, die zur Herstellung eines erfindungsgemässen hinterleuchtbaren Bauteils verwendet wird;
- Fig. 3b: eine schematische Seitenansicht der Trägerschicht der Fig. 3a, nach Bestückung mit elektronischen Elementen;
- Fig. 4: eine schematische Draufsicht auf eine mit elektronischen Elementen bestückte Trägerschicht, die zur Herstellung eines erfindungsgemässen hinterleuchtbaren Bauteils verwendet wird;
- Fig. 5a: eine schematische Seitenansicht einer teilweise aufgerollten und mit elektronischen Elementen bestückten Trägerschicht, die zur Herstellung eines erfindungsgemässen hinterleuchtbaren Bauteils verwendet wird;
- Fig. 5b: eine schematische Seitenansicht, der druck- und/oder heissumgeformten Trägerschicht der Fig. 5a;
- Fig. 6a: eine schematische Seitenansicht einer zugeschnittenen und druck- und/oder heissumgeformten Trägerschicht, die zur Herstellung eines erfindungsgemässen hinterleuchtbaren Bauteils verwendet wird;
- Fig. 6b: eine schematische Seitenansicht der Trägerschicht der Fig. 6a, nach Bestückung mit elektronischen Elementen;
- Fig. 7: eine schematische Querschnittsansicht des zur Herstellung des Bauteils der Fig. 1 verwendeten Trägers in Alleinstellung;
- Fig. 8: eine schematische Querschnittsansicht des zur Herstellung des Bauteils der Fig. 1 verwendeten Lichtleiters in Alleinstellung;
- Fig. 9a: eine schematische Querschnittsansicht des Lichtleiters der Fig. 8 mit darauf aufgebrachter Trägerschicht bei der Herstellung des Bauteils der Fig. 1;
- Fig. 9b: eine schematische Querschnittsansicht des zur Herstellung des Bauteils der Fig. 1 verwendeten Dekorelements (oben) sowie des fertig hergestellten Bauteils (unten);
- Fig. 10a: eine schematische Querschnittsansicht eines Lichtleiters mit darauf aufgebrachter Trägerschicht bei der Herstellung eines hinterleuchtbaren Bauteils gemäss einer zweiten Ausführungsform;
- Fig. 10b: eine schematische Querschnittsansicht des zur Herstellung des Bauteils verwendeten Dekorelements (oben) sowie des fertig hergestellten Bauteils (unten) gemäss der zweiten Ausführungsform;
- Fig. 11: eine schematische Querschnittsansicht eines erfindungsgemässen hinterleuchtbaren Bauteils gemäss einer dritten Ausführungsform;
- Fig. 12: eine schematische Querschnittsansicht eines erfindungsgemässen hinterleuchtbaren Bauteils gemäss einer vierten Ausführungsform;
- Fig. 13a: eine schematische Draufsicht auf eine zur Herstellung eines erfindungsgemässen Bauteils verwendeten Trägerschicht gemäss einer ersten Variante;
- Fig. 13b: eine schematische Draufsicht auf eine zur Herstellung eines erfindungsgemässen Bauteils verwendeten Trägerschicht gemäss einer zweiten Variante;
- Fig. 14: eine schematische Querschnittsansicht eines erfindungsgemässen hinterleuchtbaren Bauteils gemäss einer fünften Ausführungsform;
- Fig. 15: eine schematische Querschnittsansicht eines erfindungsgemässen hinterleuchtbaren Bauteils gemäss einer sechsten Ausführungsform;
- Fig. 16: eine schematische Querschnittsansicht eines erfindungsgemässen hinterleuchtbaren Bauteils gemäss einer siebten Ausführungsform;
- Fig. 17: eine schematische Querschnittsansicht eines erfindungsgemässen hinterleuchtbaren Bauteils gemäss einer achten Ausführungsform;
- Fig. 18: eine schematische Querschnittsansicht eines erfindungsgemässen hinterleuchtbaren Bauteils gemäss einer neunten Ausführungsform;
- Fig. 19: eine schematische Querschnittsansicht eines erfindungsgemässen hinterleuchtbaren Bauteils gemäss einer zehnten Ausführungsform;
- Fig. 20: eine schematische Querschnittsansicht eines erfindungsgemässen hinterleuchtbaren Bauteils gemäss einer elften Ausführungsform;
- Fig. 21: eine schematische Seitenansicht einer mit elektronischen Elementen bestückten Trägerschicht, die zur Herstellung eines erfindungsgemässen hinterleuchtbaren Bauteils verwendet wird;
- Fig. 22: eine schematische Seitenansicht der auf eine lichtdurchlässige Schicht aufgebrachten Trägerschicht der Fig. 21;
- Fig. 23: eine schematische Querschnittsansicht eines erfindungsgemässen hinterleuchtbaren Bauteils gemäss einer zwölften Ausführungsform;
- Fig. 24: eine schematische Querschnittsansicht eines erfindungsgemässen hinterleuchtbaren Bauteils gemäss einer dreizehnten Ausführungsform;
- Fig. 25: eine schematische Querschnittsansicht eines erfindungsgemässen hinterleuchtbaren Bauteils gemäss einer vierzehnten Ausführungsform;
- Fig. 26: eine schematische Querschnittsansicht eines erfindungsgemässen hinterleuchtbaren Bauteils gemäss einer fünfzehnten Ausführungsform;
- Fig. 27: eine schematische Querschnittsansicht einer zur Herstellung eines erfindungsgemässen Bauteils verwendeten Trägerschicht gemäss einer Variante;
- Fig. 28: eine schematische Querschnittsansicht einer zur Herstellung eines erfindungsgemässen Bauteils verwendeten Trägerschicht mit darauf aufgebrachter, teilweise opaker Folie und Lackschicht;
- Fig. 29: eine schematische Querschnittsansicht eines zur Herstellung eines erfindungsgemässen Bauteils verwendeten Dekorelements gemäss einer ersten Variante, mit darauf aufgebrachten Lackschichten;
- Fig. 30: eine schematische Querschnittsansicht eines zur Herstellung eines erfindungsgemässen Bauteils verwendeten Dekorelements gemäss einer zweiten Variante, mit darauf aufgebrachter Lackschicht;
- Fig. 31: eine schematische Querschnittsansicht eines zur Herstellung eines erfindungsgemässen Bauteils verwendeten Dekorelements gemäss einer dritten Variante, mit darauf aufgebrachter Lackschicht;
- Fig. 32: eine schematische Querschnittsansicht eines zur Herstellung eines erfindungsgemässen Bauteils verwendeten Dekorelements gemäss einer vierten Variante, mit darauf aufgebrachten Lackschichten; sowie
- Fig. 33: eine schematische Querschnittsansicht eines zur Herstellung eines erfindungsgemässen Bauteils verwendeten Dekorelements gemäss einer fünften Variante, mit darauf aufgebrachter Lackschicht.

### BESCHREIBUNG BEVORZUGTER AUSFÜHRUNGSFORMEN

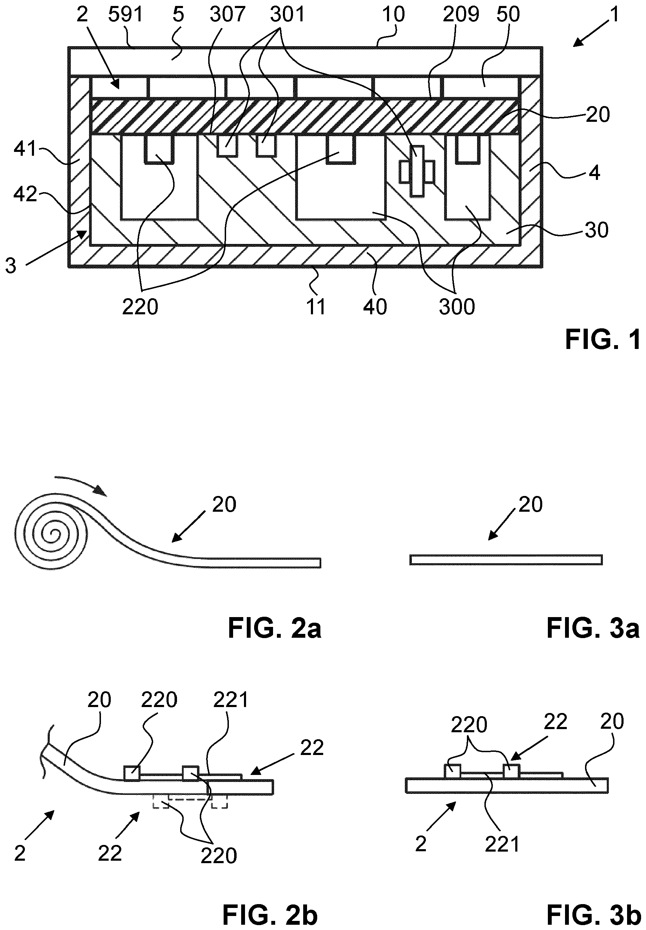

In den Figuren 1 bis 33 sind unterschiedliche erfindungsgemässe Ausführungsformen sowie Teile davon beispielhaft illustriert. Merkmale, welche eine identische oder zumindest ähnliche Wirkung und/oder Funktion aufweisen, jedoch unterschiedlichen Ausführungsformen oder Varianten angehören, sind in den Figuren 1 bis 33 jeweils mit denselben Bezugszeichen versehen.

Die Figur 1 zeigt eine erste erfindungsgemässe Ausführungsform eines im Querschnitt schematisch dargestellten hinterleuchtbaren Bauteils 1 eines Fahrzeugs, insbesondere eines Kraftfahrzeugs. Das gezeigte Bauteil 1 kann ein Interieurbauteil zur Anordnung im Fahrgastraum eines Kraftfahrzeugs sein oder ein Exterieurbauteil zur Anordnung an der Aussenseite eines Kraftfahrzeugs.

Das Bauteil 1 weist eine Sichtseite 10 auf, welche im bestimmungsgemässen Gebrauchszustand dem Betrachter zugewandt ist, sowie eine Rückseite 11, welche für den Betrachter meist nicht sichtbar ist.

Eine erste Bauteileinheit 2 des Bauteils 1 weist eine Trägerschicht 20 mit einer Vorderseite 209 sowie an deren Rückseite angebrachte elektronische Elemente 22 auf. Die Trägerschicht 20, welche insbesondere durch eine Folie gebildet sein kann, erstreckt sich hier zweidimensional in einer Ebene. Bei den an der Trägerschicht 20 angebrachten elektronischen Elementen 22 handelt es sich insbesondere um Leuchtelemente in Form von Leuchtdioden (LEDs) 220. Des Weiteren umfassen die elektronischen Elemente 22 Leiterbahnen, welche in der Figur 1 aber nicht dargestellt sind und zur Stromversorgung und Ansteuerung der Leuchtdioden 220 dienen.

Eine zweite Bauteileinheit 3 des Bauteils 1 wird durch einen Lichtleiter 30 gebildet. Der Lichtleiter 30 ist an der Rückseite der Trägerschicht 20 angeordnet und liegt dort an dieser an, wobei er sich gleich weit in die Länge und die Breite erstreckt wie die Trägerschicht 20. Um ein Hineinragen der Leuchtdioden 220 zu ermöglichen, weist der Lichtleiter 30 entsprechend angeordnete und dimensionierte Vertiefungen 300 auf. Jeder Leuchtdiode 220 ist jeweils eine Vertiefung 300 zugeordnet.

Der Lichtleiter 30 ist als Ganzes einstückig, vorzugsweise im Spritzgussverfahren, aus einem lichtdurchlässigen Kunststoffmaterial hergestellt. Der Lichtleiter 30 dient zum Verteilen und Leiten des von den Leuchtdioden 220 eingestrahlten Lichts in Richtung der Sichtseite 10, um dadurch eine homogene Hinterleuchtung des Bauteils 1 zu erreichen. Das eingestrahlte Licht pflanzt sich dabei im Inneren des Lichtleiters 30 via Mehrfachreflexionen an den Grenzflächen des Lichtleiters 30 fort bis es schliesslich den Lichtleiter 30 an dessen Vorderseite 307 verlässt und durch die lichtdurchlässig ausgebildete Trägerschicht 20 zur Sichtseite 10 hin hindurchtritt. Um eine effizientere Lichtauskopplung aus dem Lichtleiter 30 zu erreichen, sind im Inneren und an der Vorderseite des Lichtleiters 30 Lichtumlenkstrukturen 301 ausgebildet, welche das Licht gezielt oder diffus in Richtung der Sichtseite 10 umlenken. Die im Inneren des Lichtleiters 30 vorgesehenen Lichtumlenkstrukturen 301, von denen in der Figur 1 nur eine beispielhaft dargestellt ist, sind bevorzugt durch eine lokale Materialaufschmelzung mit Hilfe eines Lasers hergestellt. Wie es in der Figur 1 schematisch dargestellt ist, bilden die im Inneren des Lichtleiters 30 vorgesehenen Lichtumlenkstrukturen 201 jeweils einen langgestreckten Grundkörper mit zwei Fahnen, die auf diametral gegenüberliegenden Seiten daran angebracht sind. Bei den an der Oberfläche des Lichtleiters 30 vorgesehenen Lichtumlenkstrukturen 301 handelt es sich um Oberflächenstrukturen, die ebenfalls mit Hilfe eines Lasers hergestellt sein können oder durch die Spritzgussform vorgegeben oder durch mechanische Materialabtragung erzeugt sein können.

Die erste Bauteileinheit 2 und die zweite Bauteileinheit 3 sind in einer Vertiefung 42 eines Trägers 4 aufgenommen. Der Träger 4 dient somit zur Aufnahme und zum Halten der ersten und der zweiten Bauteileinheit 2, 3 sowie zur Befestigung des Bauteils im Fahrzeug. Wie aus der Figur 1 ersichtlich ist, weist der Träger 4 einen Boden 40 auf sowie eine sich von diesem nach oben hin erstreckend Seitenwand 41. Der Boden 40 bedeckt den Lichtleiter 30 zur Rückseite 11 hin, und die Seitenwand 41 umschliesst den Lichtleiter 30 sowie die Trägerschicht 20 seitlich. Dadurch verhindert der opak ausgebildete Träger 4, dass Lecklicht zur Rückseite 11 oder zu den Seiten hin aus dem Bauteil 1 austreten kann.

Zur Sichtseite 10 hin ist die Vertiefung 42 des Trägers 4 mittels eines lichtdurchlässigen Dekorelements 5 mit einer Vorderseite 591 verschlossen. An der Rückseite des Dekorelements 5 sind Klemmelemente 50 vorgesehen, welche auf der Vorderseite der Trägerschicht 20 aufliegen und dadurch die erste und die zweite Bauteileinheit 2, 3 nach unten in den Träger 4 drücken. Die erste und die zweite Bauteileinheit 2, 3 sind dadurch wirksam aneinander sowie im Träger 4 gehalten. Die Befestigung des Dekorelements 5 am Träger 4 ist in der Figur 1 nicht gezeigt. Sie kann mechanisch zum Beispiel mittels Schrauben oder Rastelementen und/oder mittels eines Klebstoffs erfolgen. Die Klemmelemente 50 können insbesondere am Dekorelement 5 angeformt sein. Mittels Entfernen des Dekorelements 5 vom Träger 4 kann das Bauteil 1 bei Bedarf sehr einfach demontiert, das heisst auseinandergenommen werden. Insbesondere können die erste Bauteileinheit 2 und die zweite Bauteileinheit 3 dann einfach voneinander entfernt werden. Wenn zum Beispiel ein Defekt bei den elektronischen Elementen 22 vorliegt, ist ein Austausch oder Reparatur der ersten Bauteileinheit 2 dadurch sehr einfach möglich. Auch ist dadurch eine einfache Recyclierbarkeit des Bauteils 1 gegeben.

Die Figur 2a zeigt die zur Herstellung des Bauteils der Figur 1 verwendete Trägerschicht 20 in einem noch teilweise aufgerollten Zustand. Wie es in der Figur 2b ersichtlich ist, wird die Trägerschicht 20 abgerollt und direkt mit elektronischen Elementen 22 bestückt. Die elektronischen Elemente 22 umfassen hier mehrere Leuchtdioden 220 sowie diese verbindende Leiterbahnen 221. Die elektronischen Elemente 22 sind an der Rückseite der Trägerschicht 20 angebracht (durchgezogene Linien in Fig. 2b). Zusätzlich können aber auch auf der Vorderseite der Trägerschicht 20 elektronische Elemente 22 angebracht werden (gestrichelte Linien). Nach der Bestückung der Trägerschicht 20 mit den elektronischen Elementen 22 wird diese zugeschnitten und gegebenenfalls umgeformt.

In der Figur 3a ist eine andere Herstellungsvariante gezeigt, bei der die Trägerschicht bereits in zugeschnittener Form bereitgestellt und anschliessend auf der Rückseite mit elektronischen Elementen 22 bestückt wird (Figur 3b).

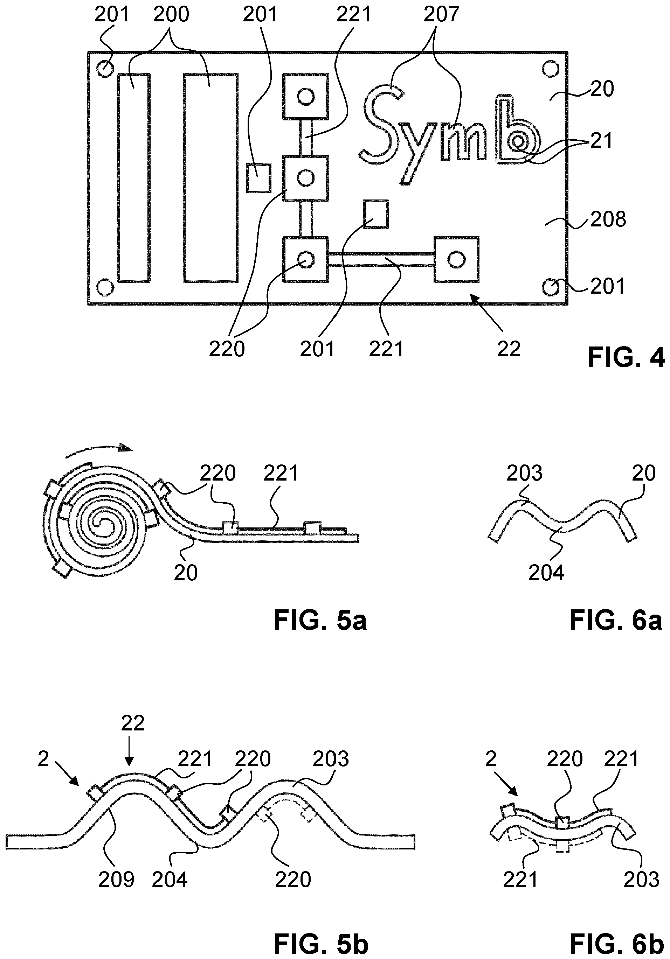

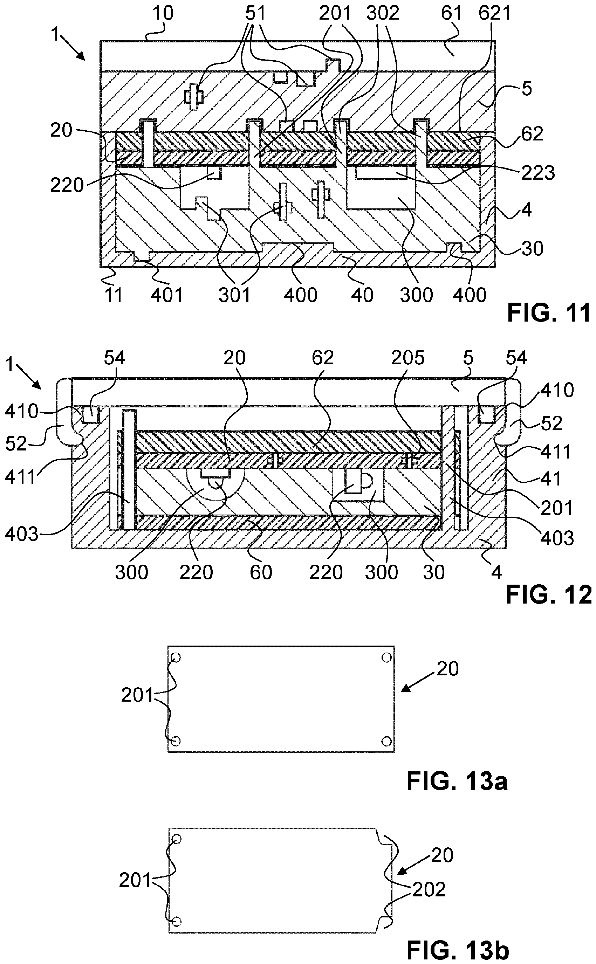

Die Figur 4 zeigt eine Draufsicht auf die Vorderseite der mit elektronischen Elementen 22 bestückten Trägerschicht 20. Wie aus Figur 4 ersichtlich ist, sind in der Trägerschicht 20 mehrere Durchbrüche 200 vorgesehen, welche bei der Herstellung des Bauteils 1 die Umformung der Trägerschicht 20 vereinfachen, um eine dreidimensional geformte Struktur zu bilden. Anstelle der Durchbrüche 200 können an den entsprechenden Stellen auch Materialverdünnungen vorhanden sein. Weitere Durchbrüche 201 sind vorgesehen, um die Trägerschicht 20 mittels Stiften 302, 403, 404, 57 zu befestigen, wie es weiter unten und in Bezug auf die Figuren 11, 12, 14 und 24 noch erläutert wird.

Wie aus der Figur 4 ausserdem ersichtlich ist, weist die Trägerschicht 20 lichtdurchlässige Bereiche 207 sowie opake Bereiche 208 auf. Die lichtdurchlässigen Bereiche 207, welche beispielsweise durch Durchbrüche, Materialverdünnungen oder eine entsprechende Materialwahl gebildet werden, können, wie es in der Figur 4 erkennbar ist, einen Schriftzug oder ein Symbol bilden. Um einen besonderen optischen Effekt zu erzielen, können die lichtdurchlässigen Bereiche 207 zumindest teilweise mit Folienstücken 21 bedeckt sein. Die Folienstücke 21 können opak oder lichtdurchlässig ausgebildet sein. Falls sie lichtdurchlässig sein, können sie eingefärbt sein.

In der Figur 5a ist eine weitere Variante gezeigt, bei welcher die zur Herstellung des Bauteils 1 verwendete Trägerschicht 20 in aufgerolltem Zustand und bereits mit elektronischen Elementen 22 bestückt bereitgestellt ist. Die Trägerschicht 20 wird anschliessend auf die nötige Grösse und Form zugeschnitten und druck- und/oder heissumgeformt. Nach der Umformung weist die Trägerschicht 20 eine Vielzahl von lokalen Erhebungen 203 und lokalen Vertiefungen 204 auf, wie in der Figur 5b ersichtlich ist. Die lokalen Erhebungen 203 und lokalen Vertiefungen 204 können zum Beispiel einen Schriftzug oder ein Symbol bilden oder zur Anpassung der Trägerschicht 20 an den Lichtleiter 30 und somit des Bauteils 1 an eine Fahrzeugoberfläche dienen. Auch hier ist es möglich, dass die elektronischen Elemente 22 nicht nur auf der Rückseite, sondern auch auf der Vorderseite 209 der Trägerschicht 20 angeordnet sind, wie es in der Figur 5b mit gestrichelten Linien angedeutet ist.

Die Figur 6a zeigt eine Variante, bei der die Trägerschicht 20 bereits zugeschnitten und umgeformt (d.h. mit lokalen Erhebungen 203 und Vertiefungen 204 versehen) bereitgestellt ist, jedoch erst anschliessend mit elektronischen Elementen 22, das heisst mit Leuchtdioden 220 und Leiterbahnen 221, bestückt wird (Figur 6b).

Im Folgenden wird die Herstellung eines erfindungsgemässen hinterleuchtbaren Bauteils 1 gemäss einer möglichen bevorzugten Ausführungsform beschrieben. Dieses Herstellverfahren umfasst zum Beispiel folgende Verfahrensschritte:
In einem ersten Schritt wird die Trägerschicht 20 bereitgestellt, deren Rückseite bereits mit elektronischen Elementen 22 bestückt sein kann oder in einem anschliessenden Verfahrensschritt noch mit elektronischen Elementen 22 bestückt wird. Je nachdem kann die Trägerschicht 20 vor oder nach dem Bestücken noch druck- und/oder heissumgeformt sowie bzgl. ihrer Form und Grösse zugeschnitten werden. Eine derart bereitgestellte Trägerschicht 20 ist zum Beispiel in den Figuren 2a bis 6b gezeigt.

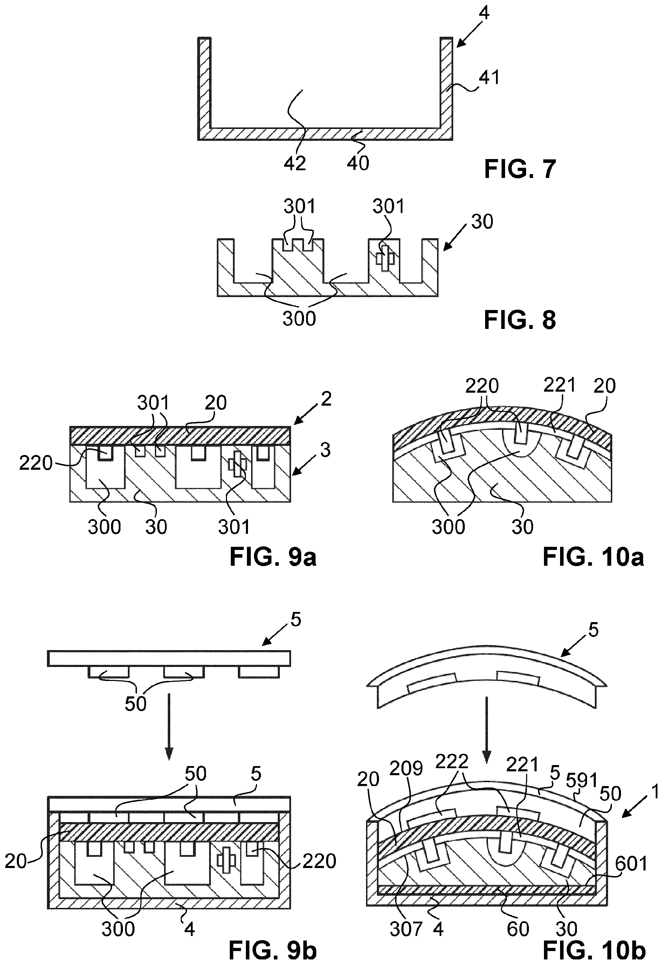

In einem nächsten Schritt wird ein Träger 4 mit einem Boden 40 und einer umlaufenden Seitenwand 41 z.B. aus einem opaken Material hergestellt bzw. bereitgestellt, wie es in der Figur 7 dargestellt ist.

Als Nächstes wird der Lichtleiter 30 hergestellt, was insbesondere im Spritzgussverfahren erfolgen kann. Am Lichtleiter 30 werden Vertiefungen 300 sowie eine Vielzahl von Lichtumlenkstrukturen 301 vorgesehen. Der so bereitgestellte Lichtleiter 30 ist in der Figur 8 gezeigt. Der Lichtleiter 30 kann insbesondere auch mittels direkten Aufbringens, insbesondere Anspritzens, eines transluzenten oder transparenten Materials auf der Vorderseite des Trägers 4 hergestellt werden. Die Lichtumlenkstrukturen 301 können insbesondere mit Hilfe eines Lasers an der Oberfläche und/oder im Inneren des Lichtleiters 30 hergestellt werden.

Anschliessend wird die Trägerschicht 20 mit den elektronischen Elementen 22, also die erste Bauteileinheit 2, derart auf der Vorderseite des Lichtleiters 30 angeordnet, dass die Leuchtelemente 220 in die am Lichtleiter 30 vorgefertigten Vertiefungen 300 hineinragen und dadurch effizient Licht in den Lichtleiter 30 einkoppeln können (siehe Figur 9a).

Danach wird der Lichtleiter 30, also die zweite Bauteileinheit 3, mit der darauf angeordneten ersten Bauteileinheit 2 in die Vertiefung 42 des Trägers 4 eingesetzt.

Als Letztes wird schliesslich das Dekorelement 5 auf den Träger 4 aufgebracht und an diesem befestigt (Figur 9b). Aufgrund ihrer Anordnung zwischen dem Dekorelement 5 und dem Träger 4 sind der Lichtleiter 30 und die mit elektronischen Elementen 22 bestückte Trägerschicht 20 aneinandergehalten. Die an der Rückseite des Dekorelements 5 vorgesehenen Klemmelemente 50 klemmen die Trägerschicht 20 und den Lichtleiter 30 dabei gegen den Boden 40 des Trägers 4. Die Sichtseite des für diesen Verfahrensschritt bereitgestellten Dekorelements 5 kann mit einer Schutzschicht, insbesondere einer Lackschicht, beschichtet sein.

In den Figuren 10a und 10b ist eine Ausführungsform gezeigt, bei welcher die Vorderseite des Lichtleiters 20 nach vorne gewölbt ist. Bei Anbringen der Trägerschicht 20 wird diese entsprechend umgeformt, so dass die Leuchtdioden 220 in die Vertiefungen 300 eingesetzt werden können. Dabei können die Leuchtdioden 220 gegenüber dem Lichtleiter 30 einen Hinterschnitt bilden, so dass die auf den Lichtleiter 30 aufgesetzte Trägerschicht 20 in ihrer nun ebenfalls gewölbten Form gehalten wird. Die mit den elektronischen Elementen 22 bestückte Trägerschicht 20 kann somit also auf den Lichtleiter 30 aufgerastet werden und bei Bedarf entsprechend einfach wieder von diesem entfernt werden. Zwischen der Trägerschicht 20 und dem Lichtleiter 30 ist eine Schicht mit Leiterbahnen 221 vorgesehen. Die Leiterbahnen 221 können in einem nicht leitenden Substrat eingebettet sein.

In der Figur 10b ist als zusätzliche Variante noch die Bestückung der Vorderseite der Trägerschicht 20 mit kapazitiven Sensoren 222 gezeigt. Des Weiteren ist ersichtlich, dass das hier ebenfalls gewölbt ausgebildete Dekorelement 5 Aussparungen zur Aufnahme der kapazitiven Sensoren 222 aufweist. Ausserdem ist bei der Ausführungsform der Figur 10b zwischen der Rückseite des Lichtleiters 30 und dem Boden 40 des Trägers 4 eine reflektive Schicht 60 mit einer Vorderseite 601 angeordnet, um die Lichtumlenkung zur Sichtseite 10 hin zu verbessern. Die reflektive Schicht 60 kann zum Beispiel durch eine Spiegelfolie oder durch eine auf dem Träger 4 oder dem Lichtleiter 30 aufgetragene, spiegelnde Beschichtung gebildet sein. In der Figur 10b ist ausserdem ersichtlich, dass die Vorderseite 307 des Lichtleiters 30 sowie die Vorderseite 209 der Trägerschicht 20, im Wesentlichen vollständig dieselbe dreidimensional geformte Struktur wie die Vorderseite 591 des Dekorelementes 5 aufweisen. Dies bietet den Vorteil, dass die Vorderseite 591 des Dekorelementes 5 optimal, insbesondere homogen, ausgeleuchtet werden kann. Bei der in der Figur 10b dargestellten Ausführungsform des erfindungsgemässen Bauteils 1 ist zudem ersichtlich, dass die Sichtseite 10 des Bauteils 1 durch die Vorderseite 591 des Dekorelementes 5 gebildet ist.

Die Figur 11 zeigt eine Ausführungsform, welche sich unter anderem dadurch von derjenigen der Figur 1 unterscheidet, dass zwischen der Trägerschicht 20 und dem Dekorelement 5 noch eine Diffusorschicht 62 mit einer Vorderseite 621 angeordnet ist, um eine besonders homogene Lichtabstrahlung zu bewirken. Auf der Vorderseite des Dekorelements 5 ist zudem eine lichtdurchlässige Lackschicht 61 aufgebracht, welche dem Bauteil 1 eine hochwertigere Erscheinung verleiht. An der Trennfläche zwischen der Lackschicht 61 und dem Dekorelement 5 sind Lichtumlenkstrukturen 51 vorgesehen, genauso wie im Inneren und an der Rückseite des Dekorelements 5. Weitere Lichtumlenkstrukturen 301 sind im Inneren sowie an der Vorderseite des Lichtleiters 30 ausgebildet. An der Rückseite der Trägerschicht 20 ist hier zumindest eine Leuchtdiode 220 sowie ein weiteres Leuchtelement in Form einer organischen Leuchtdiode (OLED) 223 angebracht.

Am Lichtleiter 30 der Ausführungsform der Figur 11 sind Vorsprünge in Form von Stiften 302 angeformt, welche die Durchbrüche 201 der Trägerschicht 20 sowie die Diffusorschicht 62 durchragen und dadurch in ihrer jeweiligen Position halten. In der Rückseite des Dekorelements 5 sind Vertiefungen ausgebildet, in welche die Stifte 302 hineinragen. Das Dekorelement 5 ist seinerseits am Träger 4 befestigt. Auf diese Weise sind die erste und die zweite Bauteileinheit 2, 3 sicher aneinander befestigt, können bei Bedarf aber auch einfach wieder voneinander getrennt werden. Der Boden 40 des Trägers 4 weist lokale Erhebungen 400 sowie lokale Vertiefungen 401 auf, um ein gegenseitiges Eingreifen des Trägers 4 und des Lichtleiters 30 zu ermöglichen. Die Anbindung des Lichtleiters 30 and den Träger 4 kann dadurch verbessert werden. Vorzugsweise ist der Lichtleiter 30 an den Träger 4 angespritzt oder diese beiden Elemente sind gemeinsam im Mehrkomponentenspritzguss hergestellt.

In der Ausführungsform der Figur 12 sind Stifte 403 am Boden 40 des Trägers 4 angeformt und ragen senkrecht von diesem aus nach oben. Sie dienen zum Halten des Lichtleiters 30, der Trägerschicht 20 und der Diffusorschicht 62, ähnlich wie die Stifte 302 bei der Ausführungsform der Figur 11. Der auf der rechten Seite der Figur 12 ersichtliche Stift 403 ist in einem Stück mit dem Träger 4 hergestellt. Der auf der linken Seite der Figur 12 dargestellte Stift 403 ist an den Träger 4 angespritzt, so dass die Anordnung, umfassend den Träger 4 und den Stift 403, zweistückig ausgebildet ist. Die Trägerschicht 20 weist hier im Inneren angeordnete Lichtumlenkstrukturen 205 auf, welche zum Beispiel in Form eines Schriftzugs oder eines Symbols angeordnet sein können, um entsprechende optische Effekte zu erzeugen. Das Dekorelement 5 ist hier in einem Abstand zur Diffusorschicht 62 angeordnet und mittels seitlichen Rastelementen 52 am Träger 4 befestigt. An der Seitenwand 41 des Trägers 4 sind hierzu entsprechende Rastkerben 411 ausgebildet. Zur Abdichtung ist and der Oberkante der Seitenwand 41 eine umlaufende Randvertiefung 410 vorgesehen, in welche ein Dichtelement 54 eingelegt und zwischen dem Dekorelement 5 und dem Träger 4 eingeklemmt ist. Wie aus der Figur 12 zudem ersichtlich ist, sind nicht alle Leuchtdioden 220 direkt zur Rückseite hin gerichtet, sondern zumindest eine ist zur Seite hin gewandt. Aufgrund des Hineinragens der Leuchtdiode 220 in die Vertiefung 300 des Lichtleiters 30 ist eine effiziente Lichteinkopplung dennoch gewährleistet.

In der Figur 13a ist die Ausgestaltung und Anordnung der Durchbrüche 201 in den Eckbereichen der Trägerschicht 20 dargestellt. Die Figur 13b zeigt, dass zur Befestigung mittels der Stifte 403 (bzw. 302) nicht zwingend seitlich umlaufend umrandete Durchbrüche 201 vorgesehen sein müssen, sondern auch zu den Seiten hin offene Aussparungen 202 vorhanden sein können. Dementsprechend angeordnete und ausgebildete Durchbrüche bzw. Aussparungen können auch beim Lichtleiter 30, der Diffusorschicht 62 oder auch bei der reflektierenden Schicht 60, welche zum Beispiel als Spiegelfolie ausgebildet ist, vorgesehen sein.

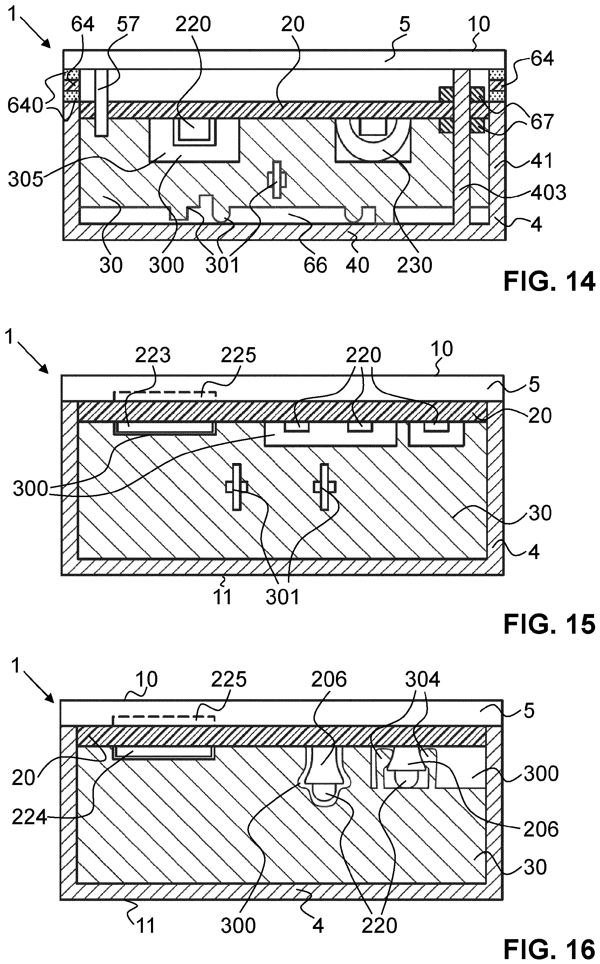

Bei der Ausführungsform der Figur 14 sind am Dekorelement 5 nach unten ragende Stifte 57 angeformt, welche in die Trägerschicht 20 und in den Lichtleiter 30 eingesteckt sind. Zur Abdichtung können die Stifte 57 an gewissen Stellen mit Dichtringen 67 umgeben sein. Die Befestigung des Dekorelements 5 am Träger 4 erfolgt hier mittels eine doppelseitigen Klebebands 64, das beidseitig mit einem Klebstoff 640 beschichtet ist. Um einen die Leuchtelemente 220 bei der Herstellung, insbesondere beim Anspritzen des Lichtleiters 30, zu schützen, können diese mit einem Schutzelement 230 versehen sein. Um eine bessere Lichteinkopplung in den Lichtleiter 30 zu bewirken, kann die Vertiefung 300 zumindest teilweise oder vollständig mit einer Lichtleiteinlage 305 aufgefüllt sein, welche das Leuchtelement 220 umgibt. Im Inneren sowie an der Rückseite des Lichtleiters 30 sind hier Lichtumlenkstrukturen 301 ausgebildet, um das eingekoppelte Licht in Richtung der Sichtseite 10 umzulenken. Aufgrund der an der Rückseite ausgebildeten Lichtumlenkstrukturen 301 ist zwischen dem Lichtleiter 30 und dem Boden 40 des Trägers 4 ein mit Luft 66 gefüllter Hohlraum vorhanden. Die Grenzfläche zwischen dem Material des Lichtleiters 30 und der Luft 66 kann zur Lichtumlenkung beitragen.

In der Ausführungsform der Figur 15 weist der Lichtleiter 30 eine erste Vertiefung 300 auf, in welche zwei Leuchtdioden 220 hineinragen. In eine zweite Vertiefung 300 ragt eine einzelne Leuchtdiode 220 hinein. Des Weiteren ist eine dritte Vertiefung 300 vorgesehen, in welche eine an der Rückseite der Trägerschicht 20 angebrachte OLED 223 hineinragt. Gegenüberliegend zur OLED 223 ist an der Vorderseite der Trägerschicht 20 ein Drucksensor 225 angebracht. Der opak ausgebildete Drucksensor 225 deckt somit die zur Rückseite 11 hin Licht abstrahlende OLED 223 zur Sichtseite 10 hin ab. Der Drucksensor 225 ragt dabei in eine rückseitig am Dekorelement 5 vorgesehene Vertiefung hinein und ist dadurch gut geschützt.

Bei der Ausführungsform der Figur 16 sind die Leuchtdioden 220 jeweils am Ende eines von der Trägerschicht 20 zur Rückseite 11 hin ragenden Vorsprungs 206 angeordnet. Der Vorsprung 206 weitet sich dabei seitlich gegen unten hin aus und bildet dadurch gegenüber dem Lichtleiter 30 einen Hinterschnitt, der die erste Bauteileinheit 2 an der zweiten Bauteileinheit 3 hält. Um die Entfernung der ersten und der zweiten Bauteileinheit 2, 3 voneinander zu erleichtern, kann der durch den Vorsprung 206 gebildete Hinterschnitt durch ein oder mehrere am Lichtleiter 30 angeformte Rastelemente 304 hintergriffen sein, wie es in der Figur 16 gezeigt ist.

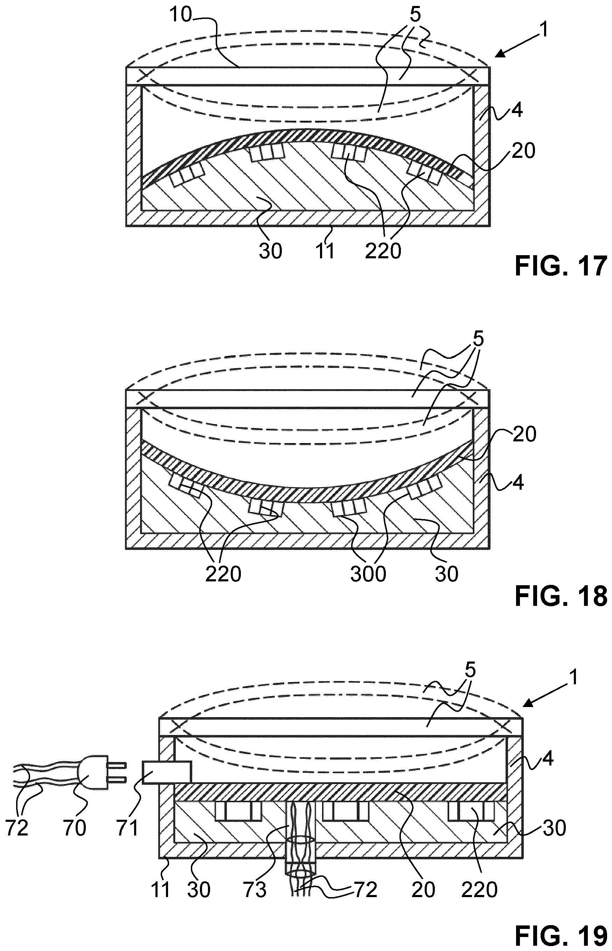

Die Figur 17 zeigt eine Ausführungsform, bei der der Lichtleiter 30 sowie die Trägerschicht 20 jeweils eine Wölbung zur Sichtseite 10 hin aufweisen. Das in einem Abstand zur Trägerschicht 20 angeordnete Dekorelement 5 kann sich flach in einer Ebene erstrecken, wie es in der Figur 17 mit durchgezogenen Linien gezeigt ist, oder es kann ebenso wie der Lichtleiter 30 und die Trägerschicht 20 zur Sichtseite 10 hin gewölbt sein (gestrichelte Linien), was bevorzugt ist. Alternativ kann das Dekorelement 5 auch zur Rückseite 11 hin gewölbt sein.

Die Figur 18 zeigt eine Ausführungsform, welche sich von derjenigen der Figur 17 darin unterscheidet, dass der Lichtleiter 30 und die Trägerschicht 20 hier zur Rückseite 11 hin gewölbt sind. Das Dekorelement 5 kann auch hier eben ausgebildet sein oder nach vorne oder nach hinten gewölbt sein. Aus optischen Gründen ist es grundsätzlich bevorzugt, wenn das Dekorelement 5 in dieselbe Richtung gewölbt ist, wie die Trägerschicht 20 und der Lichtleiter 30.

In der Ausführungsform der Figur 19 ist eine Durchgangsöffnung 73 vorhanden, welche sich durch den Lichtleiter 30 und den Träger 4 hindurch von der Rückseite der Trägerschicht 20 aus bis zur Rückseite 11 des Bauteils 1 erstreckt. Die Durchgangsöffnung 73 dient zur Durchführung von einem oder mehreren Stromkabeln 72, welche bevorzugt zur Stromversorgung der elektronischen Elemente 22 und insbesondere der Leuchtdioden 220 dienen. Alternativ oder zusätzlich kann eine seitlich angeordnete und den Träger 4 oberhalb der Trägerschicht 20 durchragende elektrische Buchse 71 vorgesehen sein, welche den Anschluss eines mit der Stromversorgung oder einer Steuerung verbundenen elektrischen Steckers 70 erlaubt.

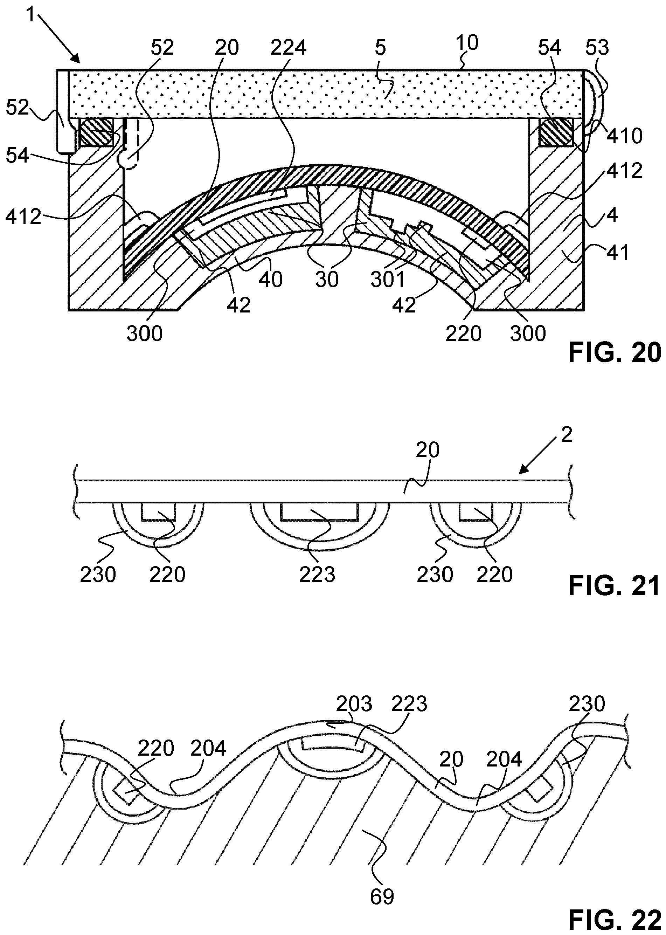

In der Figur 20 ist eine Ausführungsform gezeigt, bei der die Trägerschicht 20 und der Boden 40 des Trägers 4 zur Sichtseite 10 hin gewölbt sind. Im Boden 40 des Trägers 4 sind zwei Vertiefungen 42 ausgebildet, in die jeweils ein Teil des Lichtleiters 30 eingelegt ist. Der Lichtleiter 30 ist hier somit mehrstückig ausgebildet. Jedes Teil des Lichtleiters 30 bildet selbst eine Vertiefung 300, in welche eine an der Trägerschicht 20 angebrachte Leuchtdiode 220 hineinragt. Die Trägerschicht 20 und somit die erste Bauteileinheit 2 ist hier mittels Klemmelementen 412 festgeklemmt, die an den Innenflächen der Seitenwände 41 angebracht sind. Am Dekorelement 5 sind Rastelemente 52 und/oder Scharniere 53 angebracht, die zur Befestigung des Dekorelements am Träger 4 dienen. Die Rastelemente 52 können aussenseitig (durchgezogene Linien) oder innenseitig (gestrichelte Linien) mit der Seitenwand 41 des Trägers 4 verrastet sein. Ein umlaufendes Dichtelement 54, welches in eine Randvertiefung 410 des Trägers 4 eingelegt ist, dient zur Abdichtung des Bauteils 1 nach aussen.

Die Figur 21 zeigt eine sich in einer Ebene erstreckende Trägerschicht 20, an der Leuchtdioden 220 sowie eine OLED 223 angebracht sind. Die Leuchtdioden 220 und die OLED 223 sind jeweils durch ein Schutzelement 230 geschützt.

Dieselbe Trägerschicht 20 wie in der Figur 21 ist in der Figur 22 gezeigt. Jedoch ist sie hier vom Material einer lichtdurchlässigen Schicht 69 hinterspritzt. Durch den Anspritzdruck hat sich die Trägerschicht 20 verformt und bildet nun eine Vielzahl von lokalen Erhebungen 203 und Vertiefungen 204. Die Leuchtelemente 220, 223 blieben aufgrund der Schutzelemente 230 unbeschädigt. Die Trägerschicht 20 mit den daran angebrachten Leuchtelementen 220, 223 bildet hier gemeinsam mit der lichtdurchlässigen Schicht 69 die erste Bauteileinheit 2.

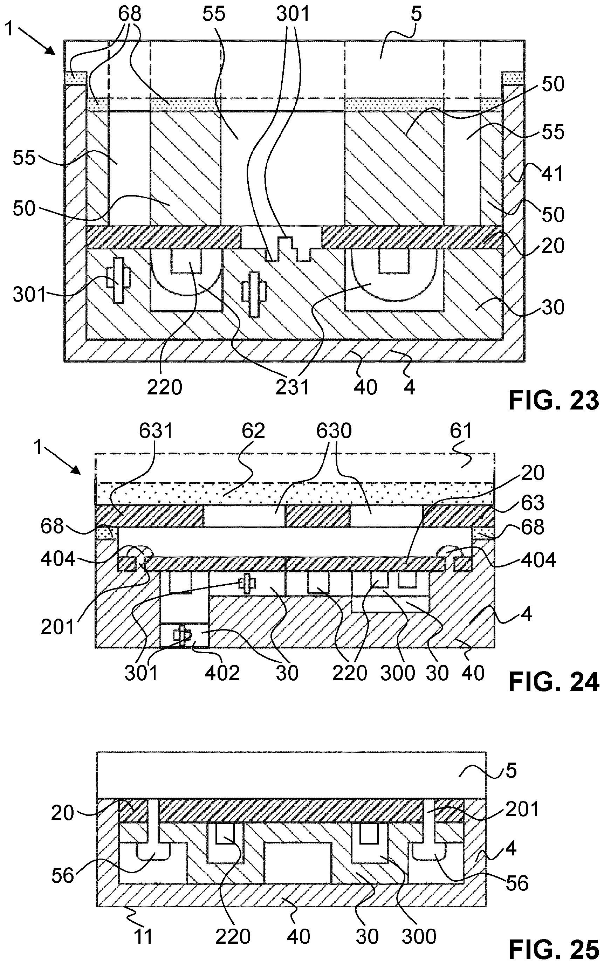

Bei der Ausführungsform der Figur 23 bilden die an der Rückseite des Dekorelements 5 angebrachten Klemmelemente 50 dazwischenliegende Kanäle 55, deren Begrenzungsflächen zum Beispiel opak beschichtet sein können, um eine gerichtete Lichtabstrahlung des Bauteils 1 zu bewirken. Die Klemmelemente 50 sind mittels eines Klebstoffs 68 am Dekorelement 5 befestigt. Mit demselben, vorzugsweise lösbaren Klebstoff 68 ist das Dekorelement 5 auch am Träger 4 befestigt. Die Trägerschicht 20 weist hier einen Durchbruch auf oder ist gar mehrteilig ausgebildet, wodurch verschiedene optische Effekte erzielt werden können. Die Leuchtdioden 220 sind jeweils von einem Schutzmantel 231 umgeben und dadurch während der Herstellung und danach vor äusseren Einflüssen geschützt.

Die Figur 24 zeigt ein Bauteil 1, welches einen im Spritzgussverfahren hergestellten Träger 4 aufweist, der nach oben hin auskragende, das heisst im Querschnitt pilzförmige Befestigungselemente 404 aufweist, um mittels Hintergreifen der Durchbrüche 201 die Trägerschicht 20 zu halten. Der Träger 4 bildet im Boden 40 eine durchgehende Öffnung 402, in welche ein Teil des mit inneren Lichtumlenkstrukturen 301 versehenen Lichtleiters 30 eingesetzt ist. Träger 4 und Lichtleiter 30 können insbesondere im Mehrkomponentenspritzgussverfahren hergestellt sein. Die verschiedenen Teile des mehrteiligen Lichtleiters 30 bilden hier dazwischenliegende Vertiefungen 300, in welche die Leuchtdioden 220 hineinragen. Die Leuchtdioden 220 sind dadurch seitlich zumindest teilweise vom Lichtleiter 30 umgeben. Oberhalb der Trägerschicht 20 ist beabstandet dazu eine Maskierfolie 63 angeordnet, welche seitlich umlaufend mittels eines Klebstoffs 68 am Träger 4 befestigt ist. Die Maskierfolie 63 weist opake Bereiche 631 sowie lichtdurchlässige Bereiche 630 auf. Die Vorderseite der Maskierfolie 63 ist mit einer Diffusorschicht 62 überzogen, welche ihrerseits mit einer lichtdurchlässigen Lackschicht 61 beschichtet ist.

In der Ausführungsform der Figur 25 sind am Dekorelement 5 zur Rückseite 11 hin ragende Befestigungselemente 56 angeformt, welche sich im zusammengebauten Zustand des Bauteils 1 durch die Durchbrüche 201 der Trägerschicht 20 sowie den Lichtleiter 30 hindurch erstrecken, um den Lichtleiter 30 mit jeweils einer endseitigen Auskragung zu hintergreifen. Der Lichtleiter 30 weist zu diesem Zweck rückseitige Vertiefungen auf, so dass an den entsprechenden Stellen zwischen dem Lichtleiter 30 und dem Boden 40 des Trägers 4 jeweils ein Hohlraum gebildet wird, wobei, wie in Figur 25 gezeigt, noch weitere derartige Hohlräume vorhanden sein können.

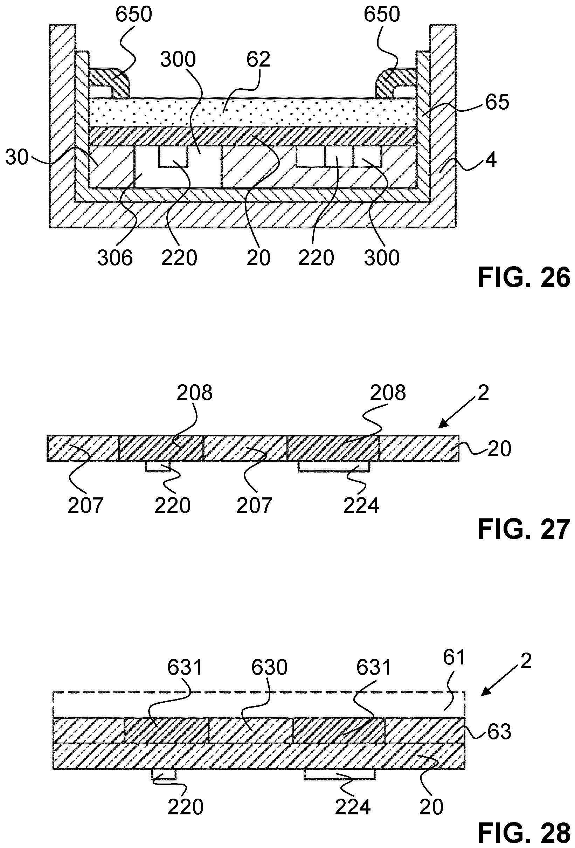

Beim Bauteil 1 gemäss der in der Figur 26 gezeigten Ausführungsform weist der Lichtleiter 30 eine durchgehende Öffnung 306 auf und/oder weist mehrere miteinander nicht verbundene Teile auf. Der von der Öffnung 306 oder den mehreren Teilen seitlich umschlossene Bereich bildet eine Vertiefung 300 des Lichtleiters 30, in welche ein an der Trägerschicht 20 angebrachte Leuchtdiode 220 hineinragt. Zur Halterung der Trägerschicht 20 am Lichtleiter 30 sowie einer auf der Vorderseite des Lichtleiters 30 angeordneten Diffusorschicht 62 dient hier ein Klemmrahmen 65. Der Klemmrahmen 65 weist nach innen ragende Klemmelemente 650 auf, welche auf der Diffusorschicht 62 aufliegen und diese gegen die Trägerschicht 20 und den Lichtleiter 30 gegen den Boden des Klemmrahmens 65 drücken und dadurch festklemmen. Der Klemmrahmen 65 selbst ist in einem Träger 4 aufgenommen und befestigt.

Die Figur 27 zeigt eine mögliche Ausgestaltung der Trägerschicht 20 mit lichtdurchlässigen Bereichen 207 und opaken Bereichen 208. Die elektronischen Elemente 22, wie insbesondere die Leuchtdioden 220 und hier eine Elektrolumineszenzfolie 224, sind jeweils an der Rückseite der opaken Bereiche 208 angeordnet und dadurch für den Betrachter nach vorne hin abgedeckt. Das von der Leuchtdiode 220 und der Elektrolumineszenzfolie 224 ausgestrahlte Licht wird via einen hier nicht dargestellten Lichtleiter 30 und mittels Umlenkung dennoch durch die lichtdurchlässigen Bereiche 207 hindurch nach vorne hin abgestrahlt.

In der Figur 28 ist eine lichtdurchlässige Trägerschicht 20 mit daran angebrachter Leuchtdiode 220 und Elektrolumineszenzfolie 224 gezeigt. Um diese elektronischen Elemente 22 nach vorne hin abzudecken, ist an der Oberseite der Trägerschicht 20 eine Maskierfolie 63 mit entsprechend angeordneten opaken Bereichen 631 und dazwischenliegenden lichtdurchlässigen Bereichen 630 angebracht. Die Maskierfolie 63 ist mit einer lichtdurchlässigen Lackschicht 61 überzogen. Die Trägerschicht 20 und die elektronischen Elemente 22 können hier allein oder gemeinsam mit der Maskierfolie 63 sowie allenfalls der Lackschicht 61 die erste Bauteileinheit 2 bilden.

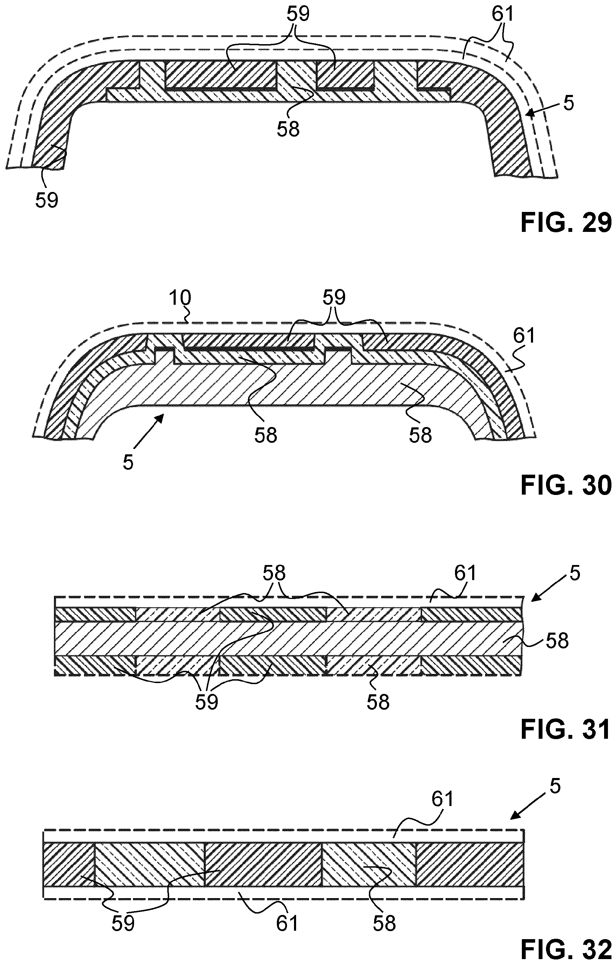

In den Figuren 29 bis 33 sind verschiedene Varianten von möglichen Dekorelementen 5 mit darauf angebrachten Lackschichten 61 gezeigt. Bei allen Varianten ist das Dekorelement 5 jeweils einerseits aus einem lichtdurchlässigen Material 58 sowie aus einem opaken Material 59 hergestellt und dadurch in gewissen Bereichen von der Rückseite zur Vorderseite hin lichtdurchlässig und in anderen Bereichen opak. Die Dekorelemente 5 sind bevorzugt jeweils im Mehrkomponentenspritzgussverfahren, insbesondere im Zweikomponentenspritzgussverfahren, hergestellt. Die Varianten der Figuren 29 und 30 weisen zudem jeweils einen um nicht ganz 90° zur Rückseite hin gebogenen Rand auf, welcher beispielsweise dazu dienen kann, das seitliche Austreten von Lecklicht zu verhindern.

Bei der Variante der Figur 29 wird das in das lichtdurchlässige Material 58 des Dekorelements 5 eingestrahlte Licht nur an gewissen Stellen bis zur Vorderseite hin weitergeleitet, da in den dazwischenliegenden Bereichen opakes Material 58 vorgesehen ist. Dadurch können zum Beispiel hinterleuchtete oder randseitig umleuchtete Schriftzüge und/oder Symbole dargestellt werden, oder mittels des opaken Materials 58 können gewisse dahinterliegende Bereiche des Bauteils 1 gezielt abgedeckt werden. Das Dekorelement 5 ist hier mit zwei lichtdurchlässigen Lackschichten 61 beschichtet, von denen eine zum Beispiel eingefärbt sein kann.

Die Variante der Figur 30 weist einen Schichtaufbau mit einem ersten lichtdurchlässigen Material 58, einem zweiten lichtdurchlässigen Material 58 sowie einem opaken Material 59 auf, wobei das Dekorelement 5 zudem noch mit einer lichtdurchlässigen Lackschicht 61 überzogen ist, welche die Sichtseite 10 des Bauteils 1 bildet. Im opaken Material 59, welches fast die gesamte Vorderseite des Dekorelements 5 bildet, sind an einigen wenigen Stellen Durchbrüche für den Lichtdurchlass ausgebildet. Bei der Herstellung des Dekorelements 5 wird diese durch das opake Material 59 gebildete Schicht mit dem lichtdurchlässigen Material 58 hinterspritzt, so dass die beiden aus dem lichtdurchlässigen Material ausgebildeten Schichten bis zur Bündigkeit mit der Vorderseite in die Durchbrüche eingreifen, welche in der aus dem opaken Material 59 gebildeten Schicht vorhanden sind.

Bei der Variante der Figur 31 wird das von einer lichtdurchlässigen Lackschicht 61 bedeckte Dekorelement 5 durch drei Schichten gebildet, von denen die mittlere ausschliesslich aus lichtdurchlässigem Material 58 gebildet wird und die aussenliegenden jeweils einander gegenüberliegend angeordnete Bereiche aufweisen, die aus lichtdurchlässigem Material 58 bzw. opakem Material 59 ausgebildet sind. Das Dekorelement 5 ist bevorzugt auch hier im Mehrkomponentenspritzgussverfahren hergestellt.

Bei der Variante der Figur 32 weist das beidseitig mit einer transparenten oder transluzenten Lackschicht 61 überzogene Dekorelement 5 eine einzige Schicht auf, die im Querschnitt abwechselnd aus Bereichen mit lichtdurchlässigem Material 58 und opakem Material 59 gebildet wird, um so einen Lichtdurchlass nur an bestimmten Stellen zu erlauben.

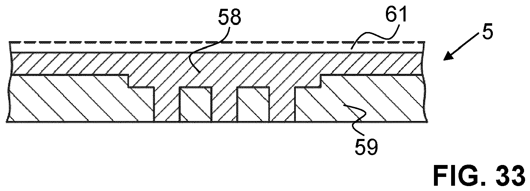

Die Variante des in der Figur 33 gezeigten Dekorelements ist zweischichtig aufgebaut mit einer vorderen Schicht aus lichtdurchlässigem Material 58 und einer rückseitig dazu angeordneten Schicht aus opakem Material 59. In der durch das opake Material 59 ausgebildeten Schicht sind jedoch Durchbrüche ausgebildet, in welche das lichtdurchlässige Material 58 der vorderen Schicht eingreift. In den Bereichen der Durchbrüche ist dadurch jeweils ein Lichtdurchtritt möglich. Die vordere, aus dem lichtdurchlässigen Material 58 ausgebildete Schicht ist zum Schutz, aus optischen Gründen und/oder zur Erzielung eines hochwertigen Eindrucks mit einer Lackschicht 61 überzogen.

Die vorliegende Erfindung ist selbstverständlich nicht auf die vorstehend beschriebenen und in den Figuren gezeigten Ausführungsformen und Varianten beschränkt, sondern eine Vielzahl von Abwandlungen und Modifikationen ist möglich. So können die Merkmale der verschiedenen Ausführungsformen selbstverständlich auf andere Ausführungsformen übertragen, weggelassen und/oder ausgetauscht werden.

### BEZUGSZEICHENLISTE

- 1: Bauteil
- 10: Sichtseite
- 11: Rückseite

- 2: Erste Bauteileinheit

- 20: Trägerschicht
- 200: Durchbruch
- 201: Durchbruch
- 202: Aussparung
- 203: Lokale Erhebung
- 204: Lokale Vertiefung
- 205: Lichtumlenkstruktur
- 206: Vorsprung
- 207: Lichtdurchlässiger Bereich
- 208: Opaker Bereich
- 209: Vorderseite

- 21: Folienstück

- 22: Elektronische Elemente
- 220: Leuchtdiode
- 221: Leiterbahn
- 222: Kapazitiver Sensor
- 223: OLED
- 224: Elektrolumineszenzfolie
- 225: Drucksensor

- 230: Schutzelement
- 231: Schutzmantel

- 3: Zweite Bauteileinheit
- 30: Lichtleiter
- 300: Vertiefung
- 301: Lichtumlenkstruktur
- 302: Stift
- 304: Rastelement
- 305: Lichtleiteinlage
- 306: Öffnung
- 307: Vorderseite

- 4: Träger
- 40: Boden
- 400: Lokale Erhebung
- 401: Lokale Vertiefung
- 402: Öffnung
- 403: Stift
- 404: Befestigungselement
- 41: Seitenwand
- 410: Randvertiefung
- 411: Rastkerbe
- 412: Klemmelement
- 42: Vertiefung

- 5: Dekorelement
- 50: Klemmelement
- 51: Lichtumlenkstruktur
- 52: Rastelement
- 53: Scharnier
- 54: Dichtelement
- 55: Kanal
- 56: Befestigungselement
- 57: Stift
- 58: Lichtdurchlässiges Material
- 59: Opakes Material
- 591: Vorderseite

- 60: Reflektive Schicht
- 601: Vorderseite

- 61: Lackschicht

- 62: Diffusorschicht
- 621: Vorderseite

- 63: Maskierfolie
- 630: Lichtdurchlässiger Bereich
- 631: Opaker Bereich

- 64: Doppelseitiges Klebband
- 640: Klebstoff

- 65: Klemmrahmen
- 650: Klemmelement

- 66: Luft
- 67: Dichtring

- 68: Klebstoff

- 69: Lichtdurchlässige Schicht

- 70: Elektrischer Stecker
- 71: Elektrische Buchse
- 72: Stromkabel
- 73: Durchgangsöffnung

## Patentansprüche

1. Hinterleuchtbares Bauteil (1), insbesondere für ein Fahrzeug, mit einer Sichtseite (10) und einer Rückseite (11), aufweisend
eine erste Bauteileinheit (2) mit einer lichtdurchlässigen Trägerschicht (20), insbesondere Trägerfolie, und mit rückseitig an der Trägerschicht (20) angebrachten elektronischen Elementen (22); sowie
eine zweite Bauteileinheit (3) mit einem rückseitig zur ersten Bauteileinheit (2) angeordneten Lichtleiter (30),
wobei die elektronischen Elemente (22) zumindest ein Leuchtelement (220, 223, 224) umfassen, welches zumindest teilweise in den Lichtleiter (30) hineinragt und derart zur Einstrahlung von Licht in den Lichtleiter (30) ausgebildet ist, dass das eingestrahlte Licht mittels Umlenkung durch die Trägerschicht (20) hindurch zur Sichtseite (10) hin abgestrahlt wird,
**dadurch gekennzeichnet, dass**
die erste Bauteileinheit (2) lösbar an der zweiten Bauteileinheit (3) angebracht ist.

2. Bauteil (1) nach Anspruch 1, wobei die erste Bauteileinheit (2) mechanisch, insbesondere mittels Klemmung, an der zweiten Bauteileinheit (3) gehalten ist.

3. Bauteil (1) nach Anspruch 1 oder 2, wobei die erste Bauteileinheit (2) auf die zweite Bauteileinheit (3) aufgerastet ist.

4. Bauteil (1) nach einem der vorhergehenden Ansprüche, wobei an der zweiten Bauteileinheit (3) und insbesondere am Lichtleiter (30) einer oder mehrere Vorsprünge (302) ausgebildet sind, die in die erste Bauteileinheit (2) hineinragen und dadurch zum Halten der ersten Bauteileinheit (2) an der zweiten Bauteileinheit (3) dienen.

5. Bauteil (1) nach einem der vorhergehenden Ansprüche, ausserdem aufweisend eine weitere Bauteileinheit, welche bevorzugt ein für einen Betrachter sichtbares Dekorelement (5) und/oder einen Träger (4) zum Tragen der ersten Bauteileinheit (2) und/oder der zweiten Bauteileinheit (3) umfasst, und an welcher einer oder mehrere Vorsprünge (403) ausgebildet sind, die in die erste Bauteileinheit (2) und/oder in die zweite Bauteileinheit (3) hineinragen und dadurch zum Halten der ersten Bauteileinheit (2) an der zweiten Bauteileinheit (3) dienen.

6. Bauteil (1) nach einem der vorhergehenden Ansprüche, ausserdem aufweisend ein für einen Betrachter sichtbares Dekorelement (5) sowie einen Träger (4) zum Tragen der ersten Bauteileinheit (2) und der zweiten Bauteileinheit (3), wobei die erste Bauteileinheit (2) aufgrund ihrer Anordnung zwischen dem Dekorelement (5) und dem Träger (4) an der zweiten Bauteileinheit (3) gehalten ist.

7. Bauteil (1) nach einem der vorhergehenden Ansprüche, wobei die erste Bauteileinheit (2) mittels eines ablösbaren Klebstoffs (68, 640) an der zweiten Bauteileinheit (3) gehalten ist.

8. Bauteil (1) nach einem der vorhergehenden Ansprüche, wobei der Lichtleiter (30) eine oder mehrere vorgefertigte Vertiefungen (300) und/oder eine oder mehrere vorgefertigte durchgehende Öffnungen (306) aufweist, in welche jeweils zumindest eines des bzw. der Leuchtelemente (220, 223, 224) hineinragt.

9. Bauteil (1) nach einem der vorhergehenden Ansprüche, wobei die Trägerschicht (20) als Diffusor ausgebildet ist.

10. Bauteil (1) nach einem der vorhergehenden Ansprüche, wobei die Sichtseite (10) des Bauteils (1) zumindest teilweise, bevorzugt vollständig, von einer Lackschicht (61) gebildet wird.

11. Bauteil (1) nach einem der vorhergehenden Ansprüche, wobei die Trägerschicht (20) eine dreidimensional geformte Struktur mit zumindest einer Erhebung oder Vertiefung bildet, bevorzugt mit einer Vielzahl von lokalen Erhebungen (203) und Vertiefungen (204).

12. Bauteil (1) nach Anspruch 11, wobei die Trägerschicht (20) einen oder mehrere Durchbrüche (200) und/oder eine oder mehrere lokale Verdünnungen aufweist, um bei der Herstellung des Bauteils (1) die Ausbildung der dreidimensional geformten Struktur zu ermöglichen oder zumindest zu vereinfachen.

13. Bauteil (1) nach einem der vorhergehenden Ansprüche, wobei die Trägerschicht (20) einen oder mehrere opake Bereiche (208) sowie einen oder mehrere lichtdurchlässige Bereiche (207) aufweist.

14. Bauteil (1) nach einem der vorhergehenden Ansprüche, ausserdem aufweisend einen Träger (4), welcher zum Tragen der ersten Bauteileinheit (2) und der zweiten Bauteileinheit (3) dient, und welcher bevorzugt eine Vertiefung (42) bildet, in welcher die zweite Bauteileinheit (2) aufgenommen ist.

15. Bauteil (1) nach einem der vorhergehenden Ansprüche, ausserdem aufweisend eine seitlich umlaufende opake Umwandung (41) zur Verhinderung von seitlich, insbesondere aus dem Lichtleiter (30) und/oder der Trägerschicht (20) austretendem Lecklicht, welche bevorzugt durch einen Träger (4) zum Tragen der ersten Bauteileinheit (2) und der zweiten Bauteileinheit (3) ausgebildet ist.

16. Bauteil (1) nach einem der vorhergehenden Ansprüche, ausserdem aufweisend ein für einen Betrachter sichtbares Dekorelement (5), das lösbar an der ersten Bauteileinheit (2) und/oder der zweiten Bauteileinheit (3) angebracht ist.

17. Bauteil (1) nach einem der vorhergehenden Ansprüche, ausserdem aufweisend eine oder mehrere Lichtumlenkstrukturen (205, 301, 51), welche zum Umlenken des von dem zumindest einen Leuchtelement (220, 223, 224) eingestrahlten Lichts zur Sichtseite (10) hin dienen, und welche bevorzugt im Inneren und/oder an einer Oberfläche des Lichtleiters (30) vorgesehen sind und/oder durch eine reflektierende Schicht (60) gebildet werden.

18. Verfahren zur Herstellung eines hinterleuchtbaren Bauteils (1), insbesondere eines hinterleuchtbaren Bauteils (1) gemäss einem der vorhergehenden Ansprüche, mit einer Sichtseite (10) und einer Rückseite (11), aufweisend folgende Schritte:
- Bereitstellen einer ersten Bauteileinheit (2), welche eine lichtdurchlässige Trägerschicht (20), insbesondere Trägerfolie, sowie rückseitig an der Trägerschicht (20) angebrachte elektronische Elemente (22) mit zumindest einem Leuchtelement (220, 223, 224) umfasst,
- Bereitstellen einer zweiten Bauteileinheit (3), welche einen Lichtleiter (30) umfasst, sowie
- Anbringen der ersten Bauteileinheit (2) an der zweiten Bauteileinheit (3) derart, dass die zweite Bauteileinheit (3) rückseitig zur ersten Bauteileinheit (2) angeordnet ist und dass das zumindest eine Leuchtelement (220, 223, 224) zumindest teilweise in den Lichtleiter (30) hineinragt und dadurch derart zur Einstrahlung von Licht in den Lichtleiter (30) ausgebildet ist, dass das eingestrahlte Licht mittels Umlenkung durch die Trägerschicht (20) hindurch zur Sichtseite (10) hin abgestrahlt wird,
**dadurch gekennzeichnet, dass**
die erste Bauteileinheit (2) lösbar an der zweiten Bauteileinheit (3) angebracht wird.

19. Verfahren nach Anspruch 18, ausserdem aufweisend den Schritt, dass die Trägerschicht (20) mit oder ohne die daran angebrachten elektronischen Komponenten (22) druckumgeformt und/oder zugeschnitten wird.
